(19) Europäisches Patentamt
European Patent Office
Office européen des brevets

(11) **EP 4 235 122 A1**

(12) **EUROPEAN PATENT APPLICATION**
published in accordance with Art. 153(4) EPC

(43) Date of publication:
**30.08.2023 Bulletin 2023/35**

(21) Application number: **21885816.5**

(22) Date of filing: **01.10.2021**

(51) International Patent Classification (IPC):
*G01J 3/32* (2006.01)   *A01G 7/00* (2006.01)
*G01N 21/27* (2006.01)   *G06Q 50/02* (2012.01)

(52) Cooperative Patent Classification (CPC):
**G01J 3/28; A01G 7/00; G01J 3/32; G01N 21/27;
G06Q 50/02**

(86) International application number:
**PCT/JP2021/036500**

(87) International publication number:
**WO 2022/091697 (05.05.2022 Gazette 2022/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.10.2020 JP 2020179198**

(71) Applicant: **Sony Group Corporation
Tokyo 108-0075 (JP)**

(72) Inventor: **MORI, Hiroshi
Tokyo 108-0075 (JP)**

(74) Representative: **MFG Patentanwälte
Meyer-Wildhagen Meggle-Freund
Gerhard PartG mbB
Amalienstraße 62
80799 München (DE)**

(54) **INFORMATION PROCESSING DEVICE, INFORMATION PROCESSING METHOD, AND PROGRAM**

(57) Multiband data including a plurality of pieces of band data including detected band data of a plurality of wavelength bands and band data of a wavelength band reconstructed from the detected band data is generated, and envelope information of spectrum data represented by the multiband data is generated.

*FIG. 5*

EP 4 235 122 A1

**Description**

TECHNICAL FIELD

The present technology relates to an information processing device, an information processing method, and a program, and particularly relates to a technology suitable for generating information regarding a farm field.

BACKGROUND ART

For example, there is an approach of remotely sensing a vegetation state by mounting an imaging device (camera) on a small flying object and imaging the vegetation state of plants while moving over a farm field.
Patent Document 1 discloses a technique for capturing an image of a farm field and performing remote sensing.

CITATION LIST

PATENT DOCUMENT

Patent Document 1: Japanese Patent No. 5162890

SUMMARY OF THE INVENTION

PROBLEMS TO BE SOLVED BY THE INVENTION

In remote sensing, a multi-spectrum camera may be used as an imaging device.
As a multi-spectrum camera that is often used in general, for example, there are a monocular sensor provided with a multiband pass filter that transmits two to three kinds of wavelength bands and a group of compound eye sensors each provided with a band pass filter that transmits a different single wavelength band.
The wavelength bands detected by such multi-spectrum cameras are often only two to five types due to their physical constraints. Furthermore, spectrum data to be acquired is also limited to the wavelength characteristics of the filter designed in advance. For this reason, it is difficult to perform sensing according to various types and states of plants in the farm field.
Therefore, the present disclosure proposes a technology that enables sensing suitable for various types and states of plants.

SOLUTIONS TO PROBLEMS

An information processing device according to the present technology includes a signal processing unit that generates multiband data including a plurality of pieces of band data including detected band data of a plurality of wavelength bands and band data of a wavelength band reconstructed from the detected band data, and an arithmetic unit that generates envelope information of spectrum data represented by the multiband data.
By reconstructing the band data, envelope information for multiband data including band data of more types of wavelength bands than the detected wavelength band is generated.
In the above-described information processing device according to the present technology, it is conceivable that the arithmetic unit generates first derivative information of the envelope information.
The first derivative information of the envelope information is obtained by obtaining a difference in intensity of the same pixel between band data of adjacent wavelength bands in the multiband data.
In the above-described information processing device according to the present technology, it is conceivable that the arithmetic unit detects a zero cross point of the first derivative information, specifies, as a peak wavelength of the envelope information, a wavelength of a zero cross point in middle of transition of the first derivative information from positive to negative, and specifies, as a bottom wavelength of the envelope information, a wavelength of a zero cross point in middle of transition of the first derivative information from negative to positive.
The peak wavelength and the bottom wavelength are wavelengths corresponding to the peak and the bottom in the envelope information, respectively.
In the above-described information processing device according to the present technology, it is conceivable that the arithmetic unit calculates an evaluation index using at least one of the peak wavelength or the bottom wavelength.
That is, an evaluation index based on the peak wavelength and the bottom wavelength is calculated.
In the above-described information processing device according to the present technology, it is conceivable that the arithmetic unit sets a value corresponding to the peak wavelength obtained from the envelope information as a first vertex, sets a value corresponding to the bottom wavelength obtained from the envelope information as a second vertex, sets a value corresponding to a predetermined wavelength located on a longer wavelength side than the peak wavelength and the bottom wavelength obtained from the envelope information as a first reference point, sets a value corresponding to a predetermined wavelength located on a shorter wavelength side than the peak wavelength and the bottom wavelength obtained from the envelope information as a second reference point, and specifies a first triangle including the first vertex, the second vertex, and the first reference point, and a second triangle including the first vertex, the second vertex, and the second reference point.

The first triangle and the second triangle are figures representing features of the envelope information.

In the above-described information processing device according to the present technology, it is conceivable that the arithmetic unit calculates an area of at least one of the first triangle or the second triangle, and calculates an evaluation index using calculated area.

That is, the evaluation index based on the areas of the first triangle and the second triangle is calculated.

In the above-described information processing device according to the present technology, it is conceivable that the arithmetic unit calculates an angle of at least one interior angle in at least one of the first triangle or the second triangle, and calculates an evaluation index using the calculated angle.

That is, the evaluation index based on the angle of the interior angle of the first triangle or the second triangle is calculated.

In the above-described information processing device according to the present technology, it is conceivable that the arithmetic unit calculates a length of at least one side of at least one of the first triangle or the second triangle, and calculates an evaluation index using the calculated length.

That is, the evaluation index based on the lengths of sides of the first triangle and the second triangle is calculated.

In the above-described information processing device according to the present technology, it is conceivable that the arithmetic unit calculates a composite product of the first derivative information from the peak wavelength to the bottom wavelength, and calculates an evaluation index using the calculated composite product.

That is, the evaluation index based on the feature expressed in the first derivative information is calculated.

In the above-described information processing device according to the present technology, it is conceivable that the arithmetic unit calculates at least one of a composite product of the first derivative information from the peak wavelength to a first wavelength or a composite product of the first derivative information from the bottom wavelength to a second wavelength, and calculates an evaluation index using the calculated composite product.

That is, the evaluation index based on the feature expressed in the first derivative information is calculated.

In the above-described information processing device according to the present technology, it is conceivable that the arithmetic unit calculates a composite product of the first derivative information from at least one of the peak wavelength or the bottom wavelength to a wavelength corresponding to an inflection point of the first derivative information, and calculates an evaluation index using the calculated composite product.

That is, the evaluation index based on the feature expressed in the first derivative information is calculated.

In the above-described information processing device according to the present technology, it is conceivable that the arithmetic unit stores intensity information of a specific wavelength band, and stores difference information with an adjacent wavelength band of a wavelength band other than the specific wavelength band.

As information with which the feature of the envelope information can be reproduced, the intensity information of the specific wavelength band and the difference information from the adjacent wavelength band of the wavelength band other than the specific wavelength band are stored.

In the above-described information processing device according to the present technology, it is conceivable that the arithmetic unit calculates difference information of envelope information between a specific wavelength band and a wavelength band other than the specific wavelength band, stores intensity information of the specific wavelength band, and stores the difference information of a wavelength band other than the specific wavelength band.

As information with which the feature of the envelope information can be reproduced, the intensity information of the specific wavelength band and the difference information calculated for the wavelength band other than the specific wavelength band are stored.

In the above-described information processing device according to the present technology, it is conceivable that the detected band data is data obtained by capturing an image of a farm field.

The farm field widely includes farm lands where cultivation of farm crops is performed, such as a cultivation land, a cropland, a hydroponic field, and a house cultivation land of crops.

In the above-described information processing device according to the present technology, it is conceivable that the evaluation index is a vegetation evaluation index.

The vegetation evaluation index widely includes an index that can be used to specify the type and state of the plant.

An information processing method according to the present technology includes generating multiband data including a plurality of pieces of band data including detected band data of a plurality of wavelength bands and band data of a wavelength band reconstructed from the detected band data, and generating envelope information of spectrum data represented by the multiband data.

That is, by reconstructing the band data, envelope information for multiband data including band data of more types of wavelength bands than the detected wavelength band is generated.

A program according to the present technology is a program that causes an information processing device to execute processing of the above-described information processing method.

BRIEF DESCRIPTION OF DRAWINGS

Fig. 1 is an explanatory view of a state of imaging of a farm field according to an embodiment of the present technology.
Fig. 2 is an explanatory diagram of remote sensing operation and image mapping according to the embodiment.
Fig. 3 is a block diagram of an information processing device according to the embodiment.
Fig. 4 is a flowchart illustrating a work procedure for farm field management according to the embodiment.
Fig. 5 is an explanatory diagram of multiband image generation according to the embodiment.
Fig. 6 is a flowchart of signal processing according to the embodiment.
Fig. 7 is an explanatory diagram of envelope information expressed by spectrum data according to the embodiment.
Fig. 8 is a flowchart of first arithmetic processing according to the embodiment.
Fig. 9 is a schematic view of a multiband image according to the embodiment.
Fig. 10 is an explanatory diagram of envelope information according to the embodiment.
Fig. 11 is an explanatory diagram of first derivative information according to the embodiment.
Fig. 12 is a flowchart of a first example of analysis processing according to the embodiment.
Fig. 13 is an explanatory diagram of an analysis example of the envelope information according to the embodiment.
Fig. 14 is an explanatory diagram of another analysis example of the envelope information according to the embodiment.
Fig. 15 is a flowchart of a second example of the analysis processing according to the embodiment.
Fig. 16 is an explanatory diagram of an analysis example of the first derivative information according to the embodiment.
Fig. 17 is an explanatory diagram of another analysis example of the first derivative information according to the embodiment.
Fig. 18 is an explanatory diagram of still another analysis example of the first derivative information according to the embodiment.
Fig. 19 is a flowchart of a third example of the analysis processing according to the embodiment.
Fig. 20 is an explanatory diagram of a data amount of a multiband image according to the embodiment.
Fig. 21 is an explanatory diagram of an example of reduction in the data amount of a multiband image according to the embodiment.
Fig. 22 is an explanatory diagram of another reduction example of the data amount of the multiband image according to the embodiment.
Fig. 23 is a flowchart of second arithmetic processing according to the embodiment.

MODE FOR CARRYING OUT THE INVENTION

Hereinafter, embodiments will be described in the following order.

<1. Overview of sensing system>
<2. Configuration of information processing device>
<3. Work procedure>
<4. Acquisition of image data and signal processing>
<5. Arithmetic processing>
<5.1. First arithmetic processing: evaluation index calculation>
<5.2. First example of analysis processing>
<5.3. Second example of analysis processing>
<5.4. Third example of analysis processing>
<5.5. Second arithmetic processing: compression storage>
<6. Summary and modification example>

<1. Overview of sensing system>

In an embodiment, a case where sensing of a vegetation state of a farm field is performed will be described as an example.

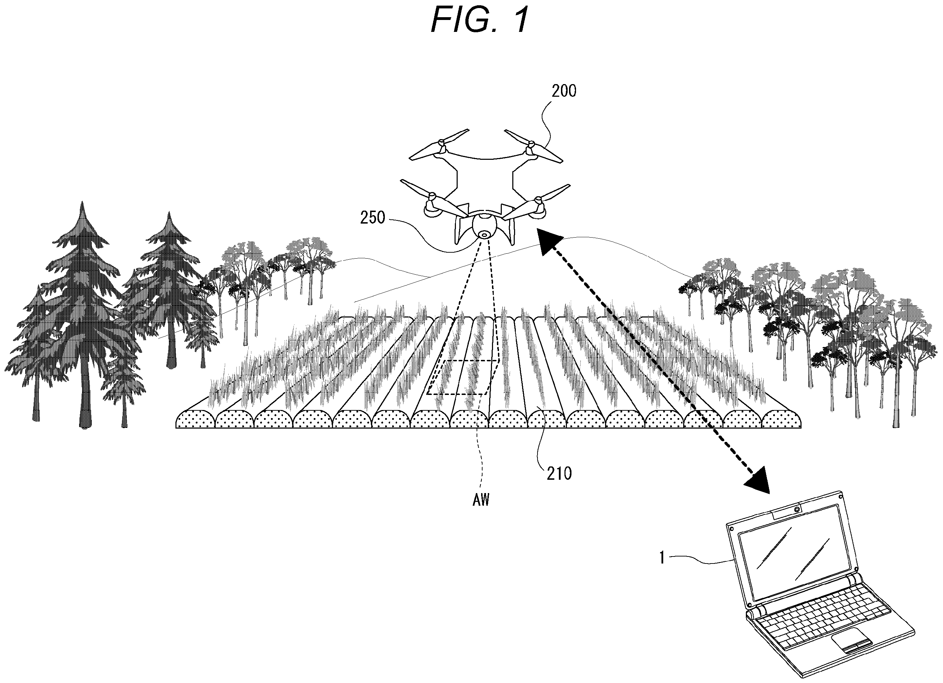

For example, as illustrated in Fig. 1, remote sensing related to vegetation in a farm field 210 is performed using an imaging device 250 mounted on a flying object 200. Then, it is assumed a case where a mapping image indicating vegetation data (for example, data of evaluation indexes of vegetation) is generated using a large number of pieces of image data (hereinafter, also referred to as "images") obtained by this imaging.

Fig. 1 illustrates a state of the farm field 210.

The small flying object 200 can move above the farm field 210 by, for example, wireless control by an operator or wireless automatic control or the like.

The imaging device 250 is set in the flying object 200, for example, so as to capture an image of the lower side. When the flying object 200 moves over the farm field 210 on a predetermined route, the imaging device 250 can obtain an image of the range AW of an imaging visual field at each time point, for example, by periodically capturing a still image.

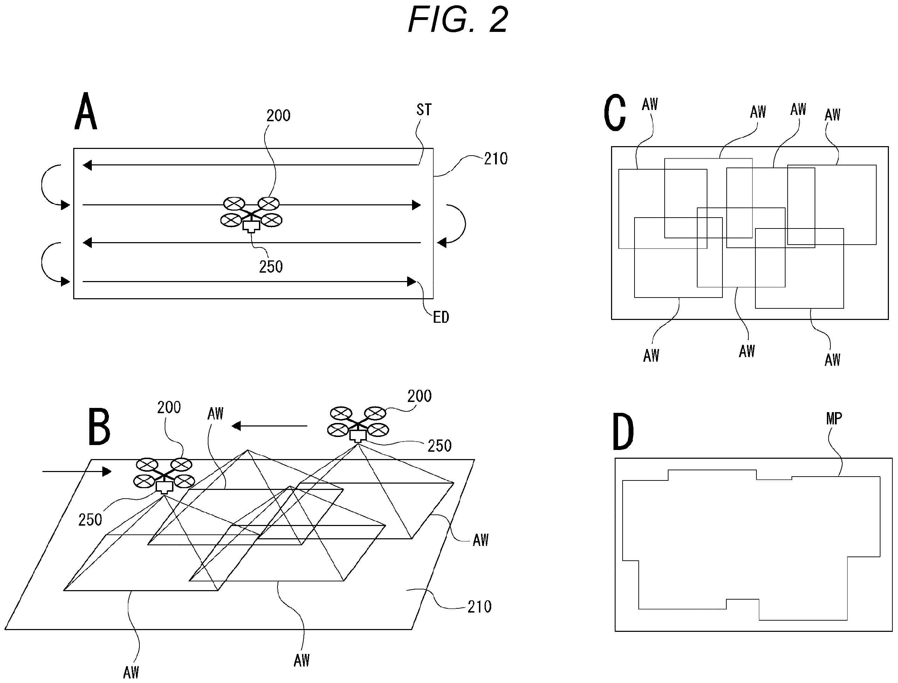

For example, the flying object 200 flies to an end position ED while turning back from the start position ST illustrated in Fig. 2A over the farm field 210. During the flight, the imaging device 250 captures an image of the range AW illustrated in Fig. 2B at each time point.

As the imaging device 250 mounted on the flying object 200, a visible light image sensor (image sensor for capturing an image of visible light of Red (R), Green (G), and Blue (B)), a camera for capturing a near infrared (NIR) image, a multi-spectrum camera that captures an image of a plurality of wavelength bands, a hyperspectrum camera, a Fourier transform infrared spectroscopy (FTIR), an infrared sensor, and the like are assumed. Of course, a plurality of types of cameras (sensors) may be mounted on the flying object 200.

As the multi-spectrum camera, for example, one that captures an NIR image and a red (R) image and can calculate a normalized difference vegetation index (NDVI) from the obtained image is also assumed to be used. The NDVI is a vegetation index indicating plant likeness, and can be used as an index indicating a distribution status and an activity degree of vegetation.

The NDVI can be obtained from the R image and the NIR image. That is, the value of NDVI is obtained as:

$$NDVI = (NIR - R)/(NIR + R)$$

Note that, in an embodiment to be described later, an example in which the multi-spectrum camera capable of detecting band data of a plurality of wavelength bands is used as the imaging device 250 will be described.

Tag information is added to an image obtained by image capturing by the imaging device 250. The tag information includes image capturing date and time information, position information (latitude and longitude information) as global positioning system (GPS) data, information regarding the flight altitude of the flying object 200 at the time of image capturing, imaging device information (individual identification information, model information, and the like of the camera), information regarding each piece of image data (information such as image size, wavelength, and image capturing parameters), and the like.

Image data and the tag information obtained by the imaging device 250 attached to the flying object 200 as described above are acquired by the information processing device 1.

For example, the image data and the tag information are transferred by wireless communication, network communication, or the like between the imaging device 250 and the information processing device 1. As the network, for example, the Internet, a home network, a local area network (LAN) or the like, a satellite communication network, and other various networks are assumed.

Alternatively, the image data and the tag information are delivered to the information processing device 1 in a mode such that a storage medium (for example, a memory card or the like) attached to the imaging device 250 is read by the information processing device 1 side.

The information processing device 1 performs various types of processing using the acquired image data and tag information.

Specifically, the information processing device 1 generates information for evaluating the state and type of vegetation in the farm field 210 using the image data and the tag information. Further, processing of presenting the generated information as an index or an image is performed.

Furthermore, the information processing device 1 can perform processing of generating a mapping image and processing of displaying the mapping image. For example, Fig. 2C illustrates ranges AW of subjects in a plurality of images captured by the imaging device 250, and a mapping image MP as illustrated in Fig. 2D is generated by arranging and stitching the ranges according to position information obtained by capturing the images. Thus, for example, it is possible to generate an image representing an evaluation index of vegetation for the entire farm field 210.

The information processing device 1 is implemented as, for example, a personal computer (PC), a field-programmable gate array (FPGA), or a terminal device such as a smartphone or a tablet.

Note that, in Fig. 1, the information processing device 1 is separated from the imaging device 250, but for example, an arithmetic device (a microcomputer or the like) serving as the information processing device 1 may be provided in a unit including the imaging device 250.

<2. Configuration of information processing device>

The information processing device 1 that acquires image data from the imaging device 250 and performs various types of processing in the above sensing system will be described.

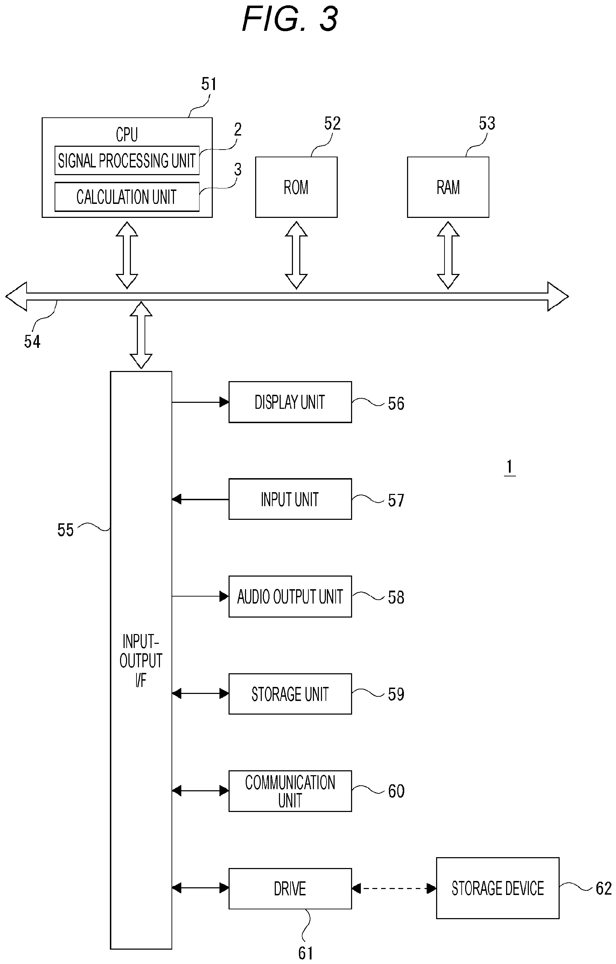

Fig. 3 illustrates a hardware configuration of the information processing device 1. The information processing device 1 includes a central processing unit (CPU) 51, a read only memory (ROM) 52, and a random access memory (RAM) 53.

The CPU 51 executes various processes according to a program stored in the ROM 52 or a program loaded from a storage unit 59 into the RAM 53. The RAM 53 also appropriately stores data and the like necessary for the CPU 51 to execute various processes.

The CPU 51, the ROM 52, and the RAM 53 are connected to one another via a bus 54. An input-output interface 55 is also connected to the bus 54.

A display unit 56 including a liquid crystal panel, an organic electroluminescence (EL) panel, or the like, an input unit 57 including a keyboard, a mouse, or the like, an audio output unit 58, a storage unit 59, a communication unit 60, and the like can be connected to the input-output interface 55.

The display unit 56 may be integrated with the information processing device 1 or may be a separate device.

In the display unit 56, a captured image, various calculation results, and the like are displayed on a display screen on the basis of an instruction from the CPU 51. Furthermore, the display unit 56 displays various operation menus, icons, messages, and the like, that is, displays as a graphical user interface (GUI) on the basis of an instruction from the CPU 51.

The input unit 57 means an input device used by a user who uses the information processing device 1.

For example, as the input unit 57, various operators and operation devices such as a keyboard, a mouse, a key, a dial, a touch panel, a touch pad, and a remote controller are assumed.

An operation by the user is detected by the input unit 57, and a signal corresponding to the input operation is interpreted by the CPU 51.

The audio output unit 58 includes a speaker, a power amplifier unit that drives the speaker, and the like, and performs necessary audio output.

The storage unit 59 includes, for example, a storage medium such as a hard disk drive (HDD) or a solid state memory. The storage unit 59 stores, for example, a program for achieving various functions of the CPU 51. Furthermore, the storage unit 59 is also used to store image data and various additional data obtained by the imaging device 250 and various data generated by the CPU 51.

The communication unit 60 performs communication processing via a network including the Internet and communication with devices of respective peripheral units.

The communication unit 60 may be, for example, a communication device that communicates with the flying object 200 and the imaging device 250.

Furthermore, a drive 61 is connected to the input-output interface 55 as necessary, a storage device 62 such as a memory card is attached thereto, and writing and reading of data are performed.

For example, a computer program read from the storage device 62 is installed in the storage unit 59 as necessary, or data processed by the CPU 51 is stored. Of course, the drive 61 may be a recording- reproducing drive for a removable storage medium such as a magnetic disk, an optical disk, or a magneto-optical disk. These magnetic disks, optical disks, magneto-optical disks, and the like are one aspect of the storage device 62.

Note that the information processing device 1 according to the embodiment is not limited to the single information processing device (computer device) 1 having the hardware configuration as illustrated in Fig. 3, and may be configured by systematizing a plurality of computer devices. The plurality of computer devices may be systematized by a LAN or the like, or may be arranged in a remote place by a virtual private network (VPN) or the like using the Internet or the like. The plurality of computer devices may include computer devices available by cloud computing services.

Furthermore, the information processing device 1 in Fig. 3 can be achieved as a personal computer such as a stationary type or a notebook type, or a portable terminal such as a tablet terminal or a smartphone. Moreover, the information processing device 1 according to the present embodiment can also be mounted in an electronic device such as a measurement device, a television device, a monitor device, an imaging device, or an equipment management device having a function as the information processing device 1.

For example, the information processing device 1 having such a hardware configuration has a calculation function by the CPU 51, a storage function by the ROM 52, the RAM 53, and the storage unit 59, a data acquisition function by the communication unit 60 and the drive 61, and an output function by the display unit 56 or the like, and the installed software functions to provide various functional configurations.

The information processing device 1 according to the embodiment includes a signal processing unit 2 and an arithmetic unit 3 illustrated in Fig. 3.

These processing functions are achieved by software activated by the CPU 51.

The program constituting the software is downloaded from the network or read from the storage device 62 (for example, a removable storage medium) and installed in the information processing device 1 of Fig. 3. Alternatively, the program may be stored in advance in the storage unit 59 or the like. Then, when the program is activated in the CPU 51, the functions of the above respective units are expressed.

Furthermore, the calculation progress and the result of each function are stored using, for example, a storage area of the RAM 53 or a storage area of the storage unit 59.

The signal processing unit 2 is a function of acquiring image data as a processing target and tag information accompanying the image data, and performing various types of signal processing on the image data. For example, image data captured by the imaging device 250 is stored in the storage unit 59 or the like, and the CPU 51 reads specific image data to be subjected to signal processing.

For example, as will be described later, the signal processing unit 2 generates multiband data having a plurality of band data using the acquired image data.

The arithmetic unit 3 is a function of performing various calculations using the data generated by the signal processing unit 2.

For example, the arithmetic unit 3 generates envelope information as described later for spectrum data represented by the multiband data generated by the signal processing unit 2. Furthermore, arithmetic processing for calculating the evaluation index on the basis of the generated envelope information and arithmetic processing for compressing and storing the generated envelope information are performed.

<3. Work procedure>

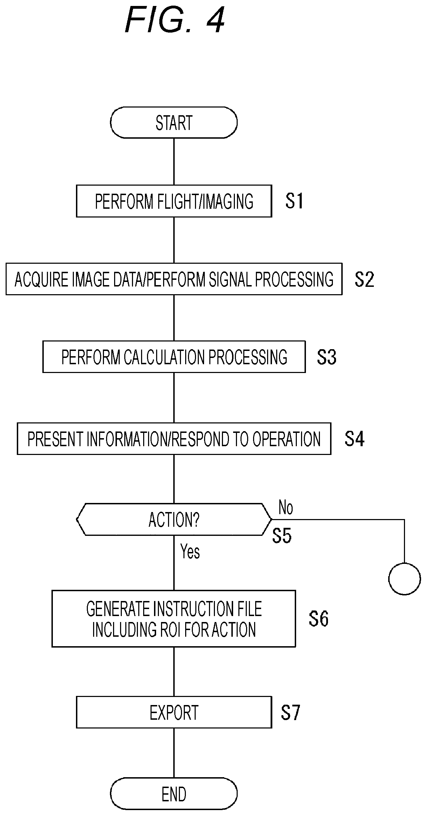

Fig. 4 illustrates an example of a work procedure for managing a farm field.

In step S1, the flying object 200 flies on the farm field 210, and images are captured by the imaging device 250 during the flight, for example, at regular time intervals. Thus, a large number of pieces of image data are obtained.

In step S2, the information processing device 1 acquires image data and performs signal processing on the acquired image data.

For example, by wired or wireless communication from the imaging device 250 or transfer of the storage device 62 such as a memory card, the information processing device 1 captures image data captured at the time of flight. The information processing device 1 causes the image data to be stored in, for example, the storage unit 59.

The information processing device 1 performs various types of signal processing as described later on the acquired image data, and stores data generated by the signal processing in, for example, the storage unit 59.

In step S3, the information processing device 1 performs arithmetic processing using data generated by signal processing. For example, processing of calculating an evaluation index of vegetation and compressing and storing generated data, or the like is performed. A specific processing example will be described later as arithmetic processing.

In step S4, the information processing device 1 presents the situation and various types of information of the farm field 210 to the user (for example, a staff member of the farm) on the UI screen and responds to the user's operation. Specifically, for example, the information processing device 1 performs processing of presenting information for considering whether or not the user performs an action such as replanting, watering, fertilizing, pesticide, or herbicide spraying, or which area is to be an action target, or the like, or receiving designation of an area in which an action is assumed.

In a case where an action such as replanting is performed as a result of input and output on the UI screen, the processing proceeds from step S5 to step S6, and the information processing device 1 performs processing of generating an instruction file including a region of interest (ROI) for the action. This instruction file is provided to, for example, a tractor, and the ROI is information indicating an area to be an action target.

Then, in step S7, the information processing device 1 exports the instruction file.

For example, when the tractor receives the instruction file, an actual action such as replanting is then performed.

Among the above procedures, the information processing device 1 according to the present embodiment performs various types of processing particularly in the image data acquisition and signal processing in step S2 and the arithmetic processing in step S3.

<4. Acquisition of image data and signal processing>

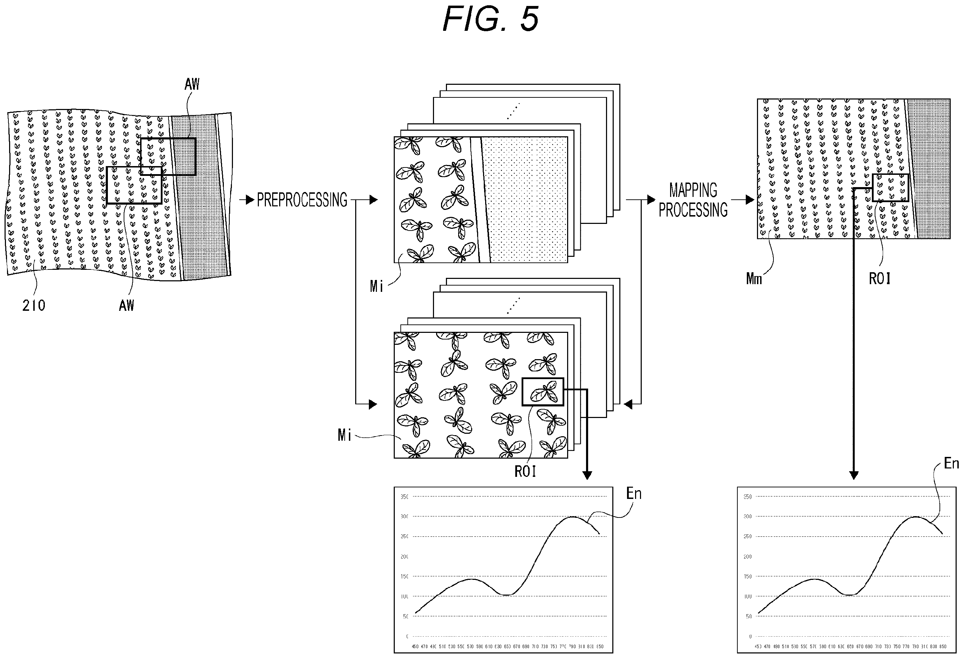

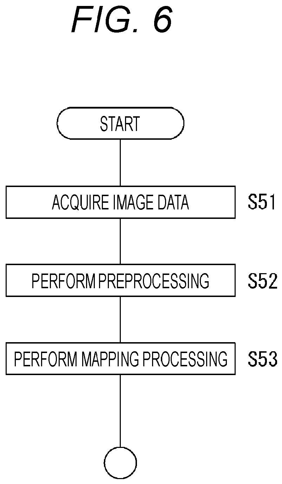

Hereinafter, image data acquired by the information processing device 1 and signal processing performed on the image data acquired by the information processing device 1 will be described with reference to Figs. 5 and 6.

In the present embodiment, a case where the multi-spectrum camera is used as the imaging device 250 will be described.

Some multi-spectrum cameras include a multispectral filter that separates incident light into more wavelength bands than RGB instead of a color filter in an RGB camera, so that an image sensor can detect intensity information of light in a plurality of wavelength bands more than three types of RGB.

Examples of such a multispectral filter include a multispectral filter using plasmon resonance induced by incident light. For example, a plasmon filter having a hole array structure including a plasmon resonator in which a plurality of holes is arranged in a honeycomb shape in a metal thin film can be used.

Band data detected by such a multi-spectrum camera can be generated in a desired wavelength band by calculation between pixels. For example, band data of a desired wavelength band can be acquired by performing demosaic processing on Raw data acquired from an image sensor and then performing inverse matrix calculation.

By performing such a wavelength reconstruction (spectrum reconstruction) process, it is possible to obtain not only band data of the detected wavelength band but also multiband data having band data of other wavelength bands.

The information processing device 1 according to the present embodiment acquires band data of a plurality of wavelength bands detected by the multi-spectrum camera, and performs signal processing on the acquired band data, thereby generating multiband data (hereinafter also referred to as a multiband image) including a plurality of pieces of band data including band data of the plurality of detected wavelength bands and band data of a wavelength band reconstructed from the detected band data.

With reference to Fig. 5, an example of generating a multiband image from image data obtained by capturing images of the farm field 210 with the imaging device 250 that is the multi-spectrum camera will be described.

The imaging device 250 acquires image data of the farm field 210 during the flight of the flying object 200, and the image data acquired at this time is image data of a large number of ranges AW covering a part of the farm field 210. The image data of each range AW includes band data of a predetermined number of wavelength bands detected according to the characteristics of the multispectral filter used as the imaging device 250. In the example of Fig. 5, the acquired image data includes band data of a smaller number of wavelength bands than 41.

When preprocessing is performed on the image data of the range AW acquired from the imaging device 250, a multiband individual image Mi for the range AW is generated. The multiband individual image Mi generated in the example of Fig. 5 is a multiband image of 41 layers (wavelength bands) acquired in increments of 10 nm with a constant half width value over the wavelength range from visible light of 450 nm to 850 nm to the near-infrared range. That is, the band data is multiband data including not only the band data of the plurality of detected wavelength bands but also band data of 41 wavelength bands including the band data of the wavelength band reconstructed from the detected band data.

The multiband individual image Mi generated as described above is a partial image covering a part (range AW) of the farm field 210, but mapping processing is performed using the individual images Mi in the plurality of ranges AW, thereby generating multiband mapping image Mm covering the entire farm field 210.

On the multiband individual image Mi or mapping image Mm generated in this manner, arithmetic processing between layers can be performed, and a vegetation index such as NDVI can be calculated.

Furthermore, the ROI can be set for the multiband individual image Mi or mapping image Mm, and various types of arithmetic processing can be performed on the ROI. For example, statistical processing (calculation processing of total value, average value, medium value, minimum value, maximum value, std deviation, and the like) of the pixel value of each layer in the ROI to be processed can be performed. In the present embodiment, envelope information as described later is generated for the ROIs set in the multiband individual image Mi or mapping image Mm. In Fig. 5, the envelope information of each ROI in the individual image Mi and the mapping image Mm is illustrated as an envelope En.

Fig. 6 illustrates a series of signal processing until the CPU 51 acquires image data to be processed and generates a multiband mapping image. These processes are implemented by the CPU 51 having the functions of the signal processing unit 2 illustrated in Fig. 3.

In step S51, the CPU 51 acquires image data to be processed.

Specifically, the CPU 51 acquires band data of a plurality of wavelength bands detected by the imaging device 250.

In step S52, the CPU 51 performs preprocessing on the acquired image data to generate a multiband image (multiband individual image Mi) .

In the preprocessing, in addition to the wavelength reconstruction of reconstructing the band data from the acquired band data of the wavelength band, various types of signal processing are performed according to the characteristics of the acquired image data. For example, spatiotemporal correction, demosaic correction, synchronization of image capturing time, spatial coordinate alignment, spatial resolution interpolation, matrix calculation between pixels, and the like are performed. Note that these processes can be appropriately omitted according to the acquired image data.

The multiband image generated by the preprocessing includes band data of a plurality of detected wavelength bands and band data of a wavelength band reconstructed from the detected band data, and includes a wavelength range and the number of layers according to specifications of the imaging device and settings of wavelength reconstruction. Such a multiband image may be an independent file for each band, or may be generated as one file storing information of a plurality of bands.

In step S53, the CPU 51 performs a mapping process using the individual image Mi generated in step S52. The CPU 51 generates a multiband mapping image Mm overlooking the farm field 210 by, for example, stitching or orthomosaic processing.

By performing the above processing, the multiband image to be processed by arithmetic processing as described later is generated.

The above processing example is an example, and other processing examples are also conceivable.

In addition, the above processing does not need to be performed as a series of processing, and for example, data generated in each step may be temporarily stored in the storage unit 59, and then processing of subsequent steps may be performed.

Furthermore, it is not necessary to perform the processing of all the steps illustrated in Fig. 6. For example, the mapping processing in step S53 may not be performed. In this case, the multiband mapping image Mm is not generated.

Furthermore, it is also conceivable a case where a part of the processing of the steps illustrated in Fig. 6 is performed by the imaging device 250. For example, the preprocessing of step S52 may be performed in advance by the imaging device 250, and the information processing device may acquire the preprocessed image data.

Note that, in the present embodiment, a case where the imaging device 250 is a multi-spectrum camera capable of acquiring band data of a plurality of wavelength bands, and the information processing device 1 acquires band data detected by the multi-spectrum camera and reconstructs the band data from the detected band data to thereby generate a multiband image including the detected band data and the reconstructed band data has been described. However, in a case where a detection means such as a hyperspectral camera capable of acquiring band data of a plurality of continuous wavelength bands at regular intervals is used as the imaging device 250, for example, a multiband image may be generated without performing wavelength reconstruction in preprocessing.

<5. Arithmetic processing>

In the present embodiment, arithmetic processing is performed using the multiband image generated by the processing of the signal processing unit 2. Specifically, the envelope information of spectrum data represented by the multiband image is generated. Furthermore, processing for evaluation index calculation and compression storage is performed using the envelope information.

<5.1. First arithmetic processing: evaluation index calculation>

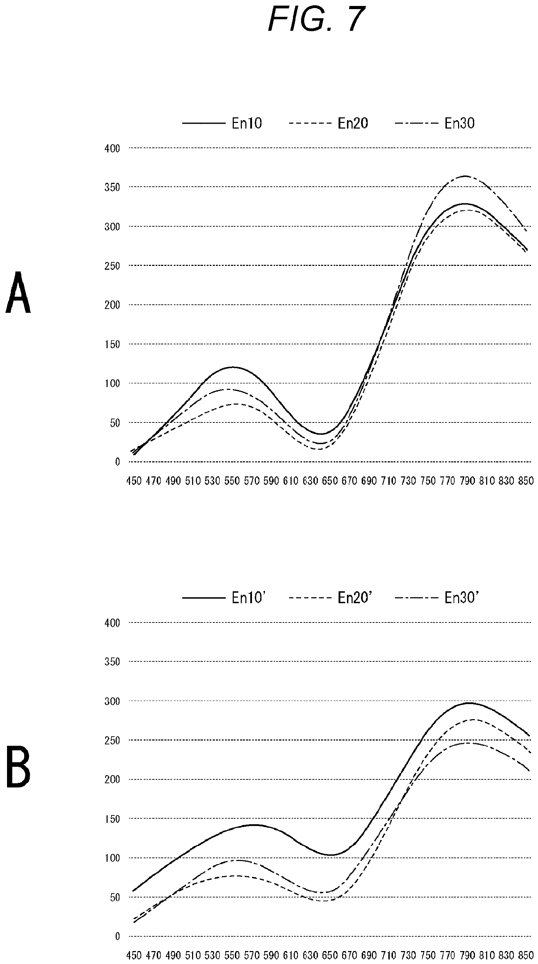

First, a specific example of spectrum data represented by the multiband image will be described with reference to Fig. 7.

Fig. 7 illustrates spectrum data (reflection spectrum) of leaves of three kinds of plants.

Fig. 7A is a reflection spectrum example of leaves of plants in an excellent growth state, and reflection spectra of corn, cotton, and soybean leaves are represented as envelopes En10, En20, and En30, respectively. Fig. 7B is a reflection spectrum example of leaves of plants in which the activity of photosynthesis has deteriorated due to ripening, for example, and reflection spectra of corn, cotton, and soybean leaves are represented as envelopes En10', En20', and En30', respectively.

The reflection spectrum in Fig. 7 is expressed by the 41-layer multiband image acquired in increments of 10 nm with a constant half width value in the wavelength range from visible light of 450 nm to 850 nm to the near-infrared range, the horizontal axis represents a wavelength (unit [nm]) in a wavelength range from 450 nm to 850 nm, and the vertical axis represents an output value (intensity information).

The envelope of the reflection spectrum is obtained by connecting plots of output values of each layer (wavelength band) constituting the reflection spectrum multiband image on a graph. The output value is, for example, a representative value (an average value or the like) of statistical data in a certain ROI. Note that, in the present disclosure, information representing an envelope is also referred to as envelope information.

In the shape of the envelope information expressed by such a reflection spectrum, features that can be used to specify the state and type of the plant that is the subject appear.

First, the envelope of the reflection spectrum of a plant exhibits a peak that is convex upward in a green wavelength band and a bottom that is convex downward (that is, concave upward) in a red wavelength band according to reflection and absorption characteristics of chlorophyll and other pigmentary substances possessed by the plant.

Fig. 7A illustrates a reflection spectrum example of leaves of plants in an excellent growth state, and leaves of plants in a healthy state contains a sufficient concentration of chlorophyll. Chlorophyll has characteristics of well absorbing light of blue and red wavelengths effective for photosynthesis, well transmitting and scattering green wavelengths not used for photosynthesis, and very well transmitting and scattering near-infrared light. Thus, the envelope of the reflection spectrum of a leaf of a plant in a healthy state becomes steep with a large amplitude between inflection points, as can be seen in the envelopes En10, En20, and En30 in Fig. 7A.

On the other hand, since the concentration of chlorophyll is low in a leaf of a plant in a decaying state, strong absorption characteristics seen in blue and red wavelengths and transmission and scattering characteristics seen in green and near infrared are weakened. For this reason, the envelope of the reflection spectrum of the leaf of a decaying plant shows a tendency of an envelope with weaker contrast between inflection points and relatively less undulation, as can be seen in the envelopes En10', En20', En30' in Fig. 7B.

Moreover, Figs. 7A and 7B illustrate a reflection spectrum example of three different kinds of plants, but values of wavelengths corresponding to a peak that is convex upward and a bottom that is concave in each envelope are slightly different, and in particular, the difference is remarkable in Fig. 7B.

As described above, the envelope information of the reflection spectrum includes information that can be used to specify the type and state of the plant. However, while information expressed as the envelope can provide the user with an overall image of the reflection spectrum in a visually easily understandable form, the information itself is difficult to handle as, for example, data (for example, universal numerical data) that can be compared with accumulated model data and can be indexed.

Accordingly, in the first arithmetic processing, the envelope information of the reflection spectrum is analyzed, and the feature represented by the shape of the envelope is quantitatively expressed. Moreover, an evaluation index is calculated using an analysis result.

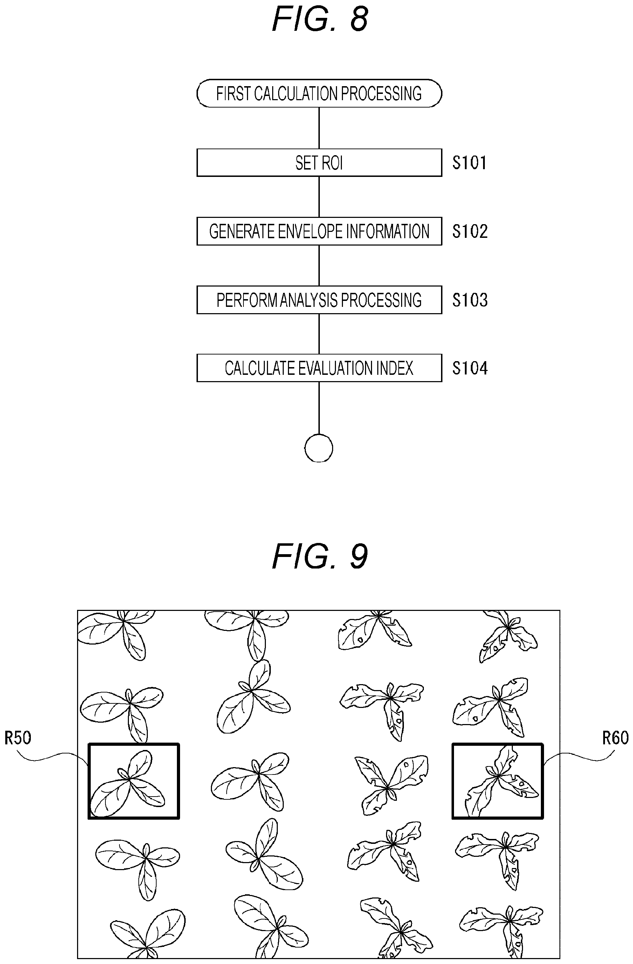

A flow of first arithmetic processing for calculating the evaluation index will be described with reference to Fig. 8. The processing illustrated in Fig. 8 is achieved by the CPU 51 having the function of the arithmetic unit 3 illustrated in Fig. 3.

In step S101, the CPU 51 acquires the multiband image to be processed and sets the ROI.

The CPU 51 may acquire the multiband individual image Mi as a processing target, or may acquire the multiband mapping image Mm subjected to the mapping processing. That is, the CPU 51 may set the ROI for the multiband individual image Mi or may set the ROI for the multiband mapping image Mm.

In addition, the ROI may be set by the user selecting a desired region, or may be set by automatically selecting a specific region based on various analyses.

In step S102, the CPU 51 generates the envelope information in the ROI.

That is, the CPU 51 generates the envelope information of the ROI set in the multiband individual image Mi or mapping image Mm.

In step S103, the CPU 51 performs analysis processing of the envelope information. A specific processing example of the analysis processing will be described later.

In step S104, the CPU 51 calculates an evaluation index using a result of the analysis processing.

By performing the above processing, the evaluation index is calculated. As the evaluation index, for example, it is conceivable that the evaluation index of vegetation is calculated.

Note that the above processing example is an example, and other processing examples are also conceivable.

<5.2. First example of analysis processing>

A specific example of the analysis processing illustrated in step S103 of Fig. 8 will be described below as first to third processing examples. In the description of each processing example, processing similar to the description processing is denoted by the same step number, and redundant description is avoided.

First, a first example of the analysis processing will be described with reference to Figs. 9 to 12. In the first example of the analysis processing, a peak wavelength and a bottom wavelength in the envelope information are specified.

Fig. 9 illustrates a schematic view of a multiband image obtained by imaging a farm field including corn in an excellent growth state and corn damaged by a herbicide from above.

This multiband image is a 41-layer multiband image obtained by acquiring the wavelength range from visible light of 450 nm to 850 nm to the near-infrared range at intervals of 10 nm with a constant half width value. A region R50 in the drawing is an ROI in which leaves of a healthy plant are captured, and a region R60 is an ROI in which leaves of a damaged plant are captured.

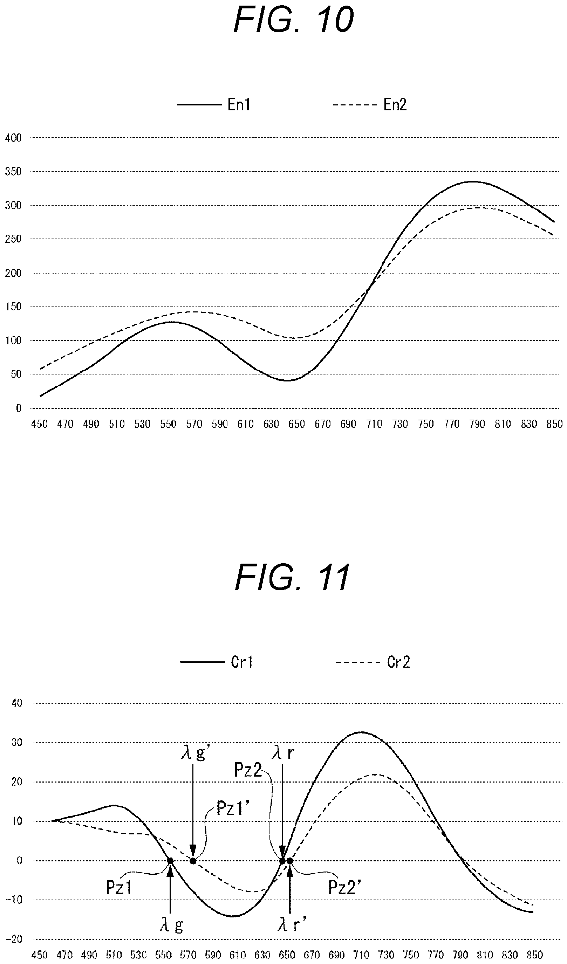

Fig. 10 illustrates the envelope information generated for each ROI in Fig. 9.

An envelope En1 indicated by a solid line in Fig. 10 represents the envelope information of the reflection spectrum obtained by connecting plots of average values in the region R50. Furthermore, an envelope En2 indicated by a broken line represents the envelope information of the reflection spectrum obtained by connecting plots of average values in the region R60. As described with reference to Fig. 7, the region R50 in which the leaves of the healthy plant are captured exhibits a steep envelope En1, and the region R60 in which the leaves of the damaged plant are captured exhibits an envelope En2 in which the undulation is relatively suppressed.

In the first example of the analysis processing, the first derivative information of the envelope information is generated, and the wavelength corresponding to each of the peak and the bottom of the envelope information is specified.

Fig. 11 illustrates a differential curve obtained by plotting values obtained by first differentiating the envelope information of Fig. 10. In Fig. 11, a differential curve Cr1 indicated by a solid line represents the first derivative information of the envelope En1, and a differential curve Cr2 indicated by a broken line represents the first derivative information of the envelope En2.

The first derivative information of the envelope information is obtained by obtaining a difference in intensity of the same pixel between adjacent layers in the multiband image. For example, the first derivative information of the envelope information in the 41-layer multiband image acquired in increments of 10 nm in the wavelength range of 450 nm to 850 nm is expressed by $P(X + 10) - P(\lambda)$; $\lambda$ = 450 to 840. In the present disclosure, a value obtained by such first differentiation is referred to as first derivative information.

In the differential curves Cr1 and Cr2, there is a zero cross point at which the value of the first derivative information becomes 0 (zero).

Specifically, in the differential curve Cr1, the sign of the first derivative information changes before and after the zero cross points Pz1 and Pz2 corresponding to the wavelength $\lambda g$ and the wavelength $\lambda r$. Furthermore, the sign of the differential curve Cr2 changes before and after zero cross points Pz1' and Pz2' corresponding to the wavelength $\lambda g'$ and the wavelength $\lambda r'$.

Like the zero cross points Pz1 and Pz1', the wavelengths $\lambda g$ and $\lambda g'$ corresponding to the zero point (that is, a point where a transition from positive to negative occurs and zero is crossed) at which the first derivative information transitions from positive to negative are specified as peak wavelengths corresponding to a peak (maximum) of the envelope information.

Furthermore, like the zero cross points Pz2 and Pz2', the wavelengths $\lambda r$ and $Xr'$ corresponding to the zero point (that is, a point where a transition from negative to positive occurs and zero is crossed) at which the first derivative information transitions from negative to positive are specified as bottom wavelengths corresponding to a bottom (minimum) of the envelope information.

By generating the first derivative information and specifying the peak wavelength and the bottom wavelength as described above, features of an undulating shape of the envelope information can be quantitatively expressed as numerical information. For example, it is possible to easily quantify how many nm a wavelength corresponding to a zero cross point is, and how many nm a difference occurs between a healthy leaf and a decayed leaf in terms of a peak wavelength and a bottom wavelength.

Note that even in a case where the interval between the layers is in increments of 10 nm, it is possible to perform quantification with higher resolution by performing the calculation of (Expression 1) .

$$\lambda 0 = \lambda x + 10 \times (|P(\lambda x)|/(|P(\lambda x) + |P(\lambda x + 10)|) \quad ... \text{(Expression 1)}$$

In (Expression 1), $\lambda x$ is a wavelength immediately before the change in the code of the first derivative information in increments of 10 nm, $\lambda x + 10$ is a wavelength immediately after the change in the code, and $P(\lambda x)$ and $P(\lambda x + 10)$ indicate amplitude values of the envelope at respective wavelengths. For example, in a case where $\lambda x$ = 650 nm, $P(\lambda x)$ = -0.01772, and $P(\lambda x + 10)$ = 0.02179, then $\lambda 0$ = 658.9049 nm. At this time, $P(\lambda 0)$ can be obtained by extrapolation from $P(x)$ and $P(x + 10)$ and $P(x - 10)$ and $P(x + 20)$ in the vicinity thereof.

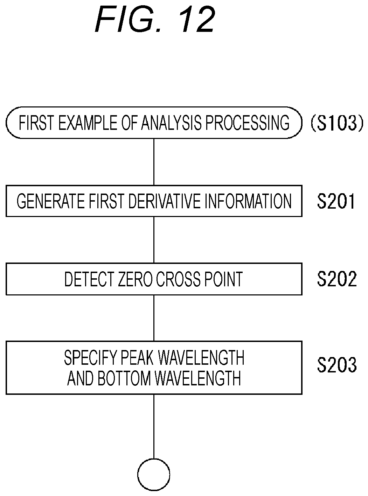

As a specific example of the first example of the analysis processing for specifying the peak wavelength and the bottom wavelength described with reference to Figs. 10 and 11, the processing example of Fig. 12 will be described. This illustrates a detailed example of the analysis processing in step S103 in Fig. 8.

In step S201, the CPU 51 generates the first derivative information of the envelope information.

In step S202, the CPU 51 detects the zero cross point of the first derivative information.

In step S203, the CPU 51 specifies the peak wavelength and the bottom wavelength on the basis of a detection result in step S202. That is, among detected zero cross points, the wavelength of the zero cross point at which the first derivative information transitions from positive to negative is specified as the peak wavelength, and the wavelength of the zero cross point at which the first derivative information transitions from negative to positive is specified as the bottom wavelength.

By the above first example of the analysis processing of Fig. 12, the peak wavelength and the bottom wavelength of the envelope information are specified.

In evaluation index calculation processing (step S104) subsequent to the first example of the analysis processing (step S103 in the first arithmetic processing of Fig. 8), the evaluation index is calculated using the information of the specified peak wavelength and bottom wavelength. Note that the CPU 51 may calculate the evaluation index by using both the specified peak wavelength and bottom wavelength, or may calculate the evaluation index by using one of them. In addition, for example, the evaluation index may be calculated using a calculation result such as a sum, a difference, and a ratio of specified wavelength values of the peak wavelength and the bottom wavelength.

<5.3. Second example of analysis processing>

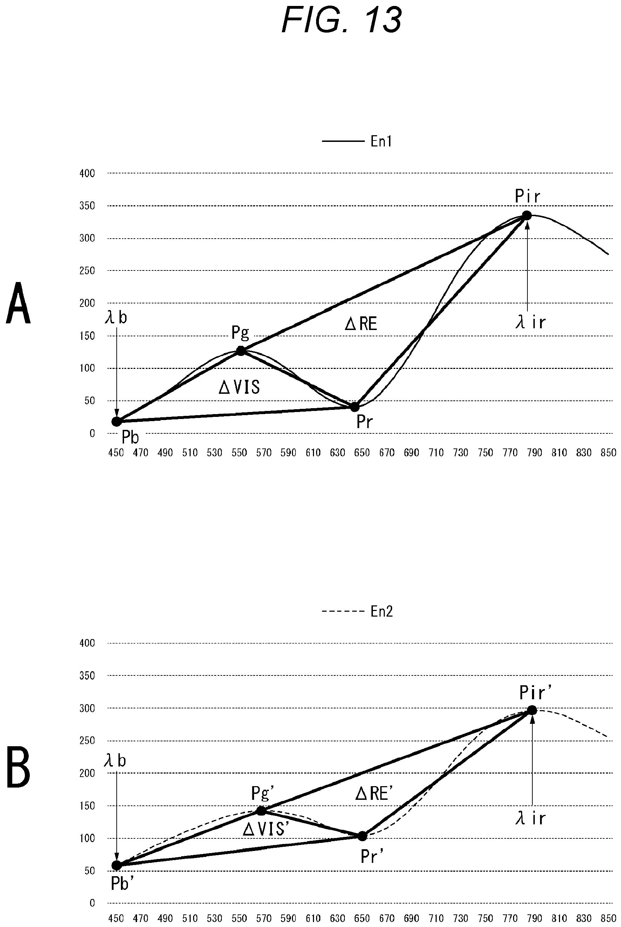

A second example of the analysis processing will be described with reference to Figs. 13 to 15. In the second example of the analysis processing, a triangle is specified in the envelope information by using the information of the peak wavelength and the bottom wavelength of the envelope information described in the first example of the analysis processing, and the shape of the specified triangle is analyzed.

First, specification of the triangle in the envelope information will be described with reference to Fig. 13.

Fig. 13A is an analysis example of the envelope En1 in Fig. 10A (that is, envelope information of leaves of healthy plants), and Fig. 13B is an analysis example of the envelope En2 in Fig. 10A (that is, envelope information of leaves of damaged plants). In the analysis example of Fig. 13A, a first triangle ΔRE and a second triangle ΔVIS including three points existing on the envelope En1 are specified. In the analysis example of Fig. 13B, a first triangle ΔRE' and a second triangle ΔVIS' including three points existing on the envelope En2 are specified.

First vertexes Pg and Pg' illustrated in respective diagrams of Figs. 13A and 13B are points (values of envelope information) on the envelopes En1 and En2 corresponding to the peak wavelengths λg and Xg', and correspond to the peaks of the envelopes En1 and En2, respectively.

The second vertexes Pr and Pr' are points (values of the envelope information) on the envelopes En1 and En2 corresponding to the bottom wavelengths λr and Xr', and correspond to bottoms of the envelopes En1 and En2, respectively.

By adding other points on the envelope to such first vertex and second vertex, a triangle defined by three points on the envelope can be specified.

In the analysis example of Fig. 13A, a first triangle ΔRE including three points of the first vertex Pg, the second vertex Pr, and the first reference point Pir is defined by adding the first reference point Pir to the first vertex Pg and the second vertex Pr. Similarly, in the analysis example of Fig. 13B, a first triangle ΔRE' including three points of the first vertex Pg', the second vertex Pr', and the first reference point Pir' is defined by adding the first reference point Pir' to the first vertex Pg' and the second vertex Pr' .

The first reference points Pir and Pir' are points (values of the envelope information) on the envelope corresponding to a first predetermined wavelength λir. The first predetermined wavelength λir is a wavelength on a longer wavelength side than the peak wavelengths λg and λg' and the bottom wavelengths λr and Xr' , and in the analysis example of Fig. 13, a wavelength corresponding to near-infrared light of 780 nm is set to the first predetermined wavelength λir. Note that the first predetermined wavelength λir can be set to a desired wavelength according to the purpose of the analysis, and for example, a wavelength corresponding to the inflection point of the envelope or a wavelength on the longest wavelength side in the envelope information to be processed may be set to the first predetermined wavelength λir.

Furthermore, in the envelope information of Fig. 13A, when a second reference point Pb is added to the first vertex Pg and the second vertex Pr, the second triangle ΔVIS including three points of the first vertex Pg, second vertex Pr, and the second reference point Pb is specified. Similarly, in the envelope information of Fig. 13B, by adding a second reference point Pb' to the first vertex Pg' and the second vertex Pr', the second triangle ΔVIS' including three points of the first vertex Pg', the second vertex Pr', and the second reference point Pb' is specified.

The second reference points Pb and Pb' are points (values of the envelope information) on the envelope corresponding to a second predetermined wavelength λb. The second predetermined wavelength λb is a wavelength on a shorter wavelength side than the peak wavelengths λg and λg' and the bottom wavelengths λr and Xr', and in the analysis example of Fig. 13, a wavelength corresponding to 450 nm of blue is set to the second predetermined wavelength λb. Note that the second predetermined wavelength λb can be set to a desired wavelength according to the purpose of the analysis, and for example, a wavelength corresponding to the inflection point of the envelope or a wavelength on the shortest wavelength side in the envelope information as in the present analysis example may be set to the second predetermined wavelength λb.

Such TΔRE and TΔRE', which are the areas of such first triangles ΔRE and ΔRE', are defined by the following (Expression 2) and (Expression 4), respectively. Furthermore, TΔVIS and TΔVIS', which are the areas of the second triangles ΔVIS and ΔVIS', are defined by the following (Expression 3) and (Expression 5), respectively.

[Mathematical 1]

$$T_{\Delta RE} = 0.5 \times \{(\lambda r - \lambda g) \times (Pir - Pg) - (\lambda ir - \lambda g) \times (Pr - Pg)\} \quad \ldots \text{(Expression 2)}$$

$$T_{\Delta VIS} = 0.5 \times \{ ( \lambda r - \lambda b) \times (Pg-Pb) - ( \lambda g - \lambda b) \times (Pr-Pb) \} \quad \dots \text{(Expression 3)}$$

$$T_{\Delta RE'} = 0.5 \times \{ ( \lambda r' - \lambda g') \times (Pir'-Pg') - ( \lambda ir - \lambda g') \times (Pr'-Pg') \} \dots \text{(Expression 4)}$$

$$T_{\Delta VIS'} = 0.5 \times \{ ( \lambda r' - \lambda b) \times (Pg'-Pb') - ( \lambda g' - \lambda b) \times (Pr'-Pb') \} \quad \dots \text{(Expression 5)}$$

The areas $T_{\Delta RE}$ and $T_{\Delta RE'}$ of the first triangle and the areas $T_{\Delta VIS}$ and $T_{\Delta VIS'}$ of the second triangle calculated as described above can be regarded as representing the shape of the envelope of the reflection spectrum indicated by the plants in different states. Accordingly, for example, it is conceivable to use the areas of the first triangle $\Delta RE$ and the second triangle $\Delta VIS$ and calculation results such as a sum, a difference, and a ratio of these areas for specifying the types and states of the plants. That is, the area of the triangle specified in the envelope information can be calculated, and the evaluation index of vegetation can be calculated using the calculated area.

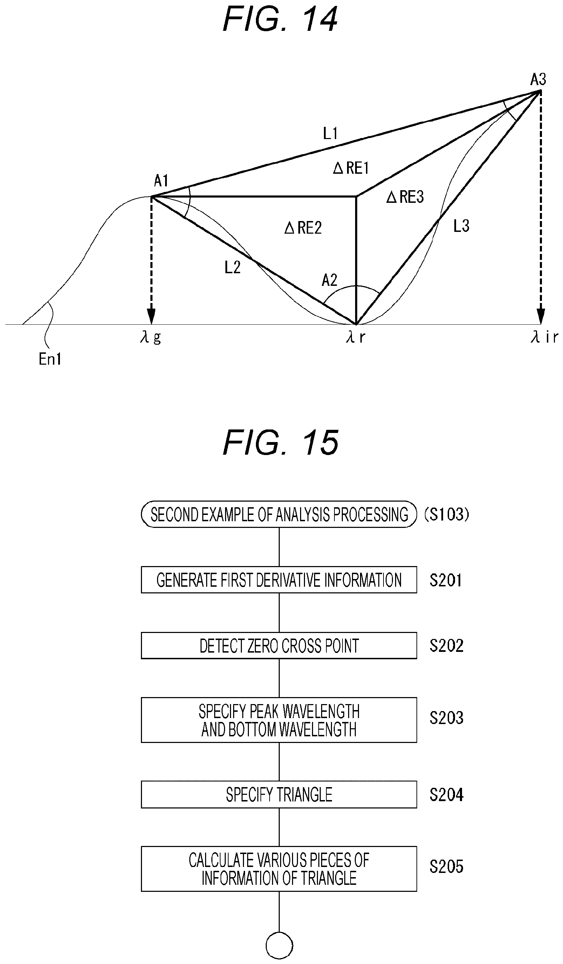

Moreover, for the first triangle $\Delta RE$ and the second triangle $\Delta VIS$ specified in the envelope information as described above, it is possible to express the features of the envelope information more variously by analyzing the shapes thereof. Hereinafter, an analysis example of the triangle specified with reference to Fig. 14 will be described.

Fig. 14 illustrates an analysis example of the first triangle $\Delta RE$ illustrated in Fig. 13A.

As an analysis example of the triangle specified in the envelope information, it is conceivable to decompose the specified triangle and calculate the area of each figure constituting the triangle.

For example, in Fig. 14, the first triangle $\Delta RE$ is decomposed into three triangles $\Delta RE1$, $\Delta RE2$, and $\Delta RE3$. Respective areas $T_{\Delta RE1}$, $T_{\Delta RE2}$, and $T_{\Delta RE3}$ of the triangles $\Delta RE1$, $\Delta RE2$, and $\Delta RE3$ constituting the first triangle $\Delta RE$ are defined by the following (Expression 6), (Expression 7), and (Expression 8).

[Mathematical 2]

$$T_{\Delta RE1} = 0.5 \times ( \lambda r - \lambda g) \times (Pir-Pg) \quad \dots \text{(Expression 6)}$$

$$T_{\Delta RE2} = 0.5 \times ( \lambda r - \lambda g) \times (Pr-Pg) \quad \dots \text{(Expression 7)}$$

$$T_{\Delta RE3} = 0.5 \times ( \lambda ir - \lambda r) \times (Pr-Pg) \quad \dots \text{(Expression 8)}$$

It is conceivable that the areas of the respective areas $T_{\Delta RE1}$, $T_{\Delta RE2}$, and $T_{\Delta RE3}$ of the three triangles constituting the first triangle $\Delta RE$ obtained by such analysis, and calculation results such as a sum, a difference, and a ratio of these areas are used to specify the type and state of the plant. That is, the area of the figure constituting the triangle is calculated, and the evaluation index of vegetation can be calculated using the calculated area.

Furthermore, as an analysis example of the triangle specified in the envelope information, it is conceivable to calculate the angle of the interior angle of the vertex of the triangle.

The three interior angles A1, A2, and A3 of the first triangle $\Delta RE$ illustrated in Fig. 14 are defined by the following (Expression 9), (Expression 10), and (Expression 11), respectively.

[Mathematical 3]

$$A1 = \tan^{-1} \{ (Pir-Pg) / ( \lambda ir - \lambda g) \} + \tan^{-1} \{ (Pg-Pr) / ( \lambda r - \lambda g) \} \dots \text{(Expression 9)}$$

$$A2 = \tan^{-1} \{ ( \lambda r - \lambda g) / (Pg-Pr) \} + \tan^{-1} \{ ( \lambda ir - \lambda r) / (Pir-Pr) \} \dots \text{(Expression 10)}$$

$$A3 = 180 - (A1+A2) \quad \dots \text{(Expression 11)}$$

It is conceivable to use the angles of the interior angles A1, A2, and A3 of the first triangle $\Delta RE$ obtained by such analysis, and calculation results such as a sum, a difference, and a ratio of these angles for specifying the type and state of the plant. That is, the angles of the interior angles of the triangle are calculated, and the evaluation index of vegetation can be calculated using the calculated angle.

For example, when applying this analysis method to Figs. 13A and 13B, compared to the first triangle ΔRE of a healthy plant, in the first triangle ΔRE' of a generally decaying plant, the interior angle A2 tends to be more obtuse, and the interior angle A1 and the interior angle A3 consequently become more acute. Among them, the angle of the interior angle A1 is affected by which wavelength the peak wavelength is. Thus, it can be said that the angles of the three vertexes of the first triangles ΔRE and ΔRE' and the ratio thereof are meaningful as means for expressing the type and state of the plant.

Furthermore, in the analysis example of the triangle specified in the envelope information, it is conceivable to calculate the length of the side constituting the triangle.

The three sides L1, L2, and L3 forming the first triangle ΔRE illustrated in Fig. 14 are defined by the following (Expression 12), (Expression 13), and (Expression 14), respectively.

[Mathematical 4]

$$L1=(\lambda ir-\lambda g)/\cos[\tan^{-1}\{(Pir-Pg)/(\lambda ir-\lambda g)\}] \quad \ldots \text{(Expression 12)}$$

$$L2=(\lambda r-\lambda g)/\cos[\tan^{-1}\{(Pg-Pr)/(\lambda r-\lambda g)\}] \quad \ldots \text{(Expression 13)}$$

$$L3=(Pir-Pr)/\cos[\tan^{-1}\{(\lambda ir-\lambda r)/(Pir-Pr)\}] \quad \ldots \text{(Expression 14)}$$

It is conceivable to use lengths of the sides L1, L2, and L3 obtained by such analysis, and calculation results such as a sum, a difference, and a ratio of these lengths for specifying the type and state of the plant. That is, the lengths of sides of the triangle are calculated, and the evaluation index of vegetation can be calculated using the calculated length.

For example, when this analysis method is applied to Figs. 13A and 13B, in the first triangle ΔRE' of a generally decaying plant, since the amplitude difference between the peak and the bottom in the envelope information is small, the side L2 and the side L3 particularly tend to be short, and the side L1 becomes relatively longer. In particular, the side L2 is affected not only by the amplitudes of the output values of the peak wavelength and the bottom wavelength but also by how the distance between the peak wavelength and the bottom wavelength changes. Thus, it can be said that the lengths of the respective sides of the first triangles ΔRE and ΔRE' and the ratios thereof have meanings as means for expressing the type and state of the plant.

In the analysis example described above with reference to Fig. 14, the example of further analyzing the shape of the first triangle ΔRE illustrated in Fig. 13A has been described, and the analysis method described above can also be applied to the first triangle ΔRE', the second triangle ΔVIS, and ΔVIS'.

As a specific example of analyzing the triangle described with reference to Figs. 13 and 14, a processing example of Fig. 15 will be described. This illustrates a detailed example of the analysis processing in step S103 in Fig. 8.

The CPU 51 performs each processing of steps S201, S202, and S203, and specifies the peak wavelength and the bottom wavelength in the envelope information.

In step S204, the CPU 51 specifies a triangle.

For example, using the peak wavelength and the bottom wavelength specified in step S203, the CPU 51 sets the value of the peak wavelength obtained from the envelope information as a first vertex, and sets the value of the bottom wavelength obtained from the envelope information as a second vertex. The CPU 51 sets the value of the first predetermined wavelength obtained from the envelope information as a first reference point, and specifies a first triangle including the first vertex, the second vertex, and the first reference point. Furthermore, the CPU 51 sets the value of the second predetermined wavelength obtained from the envelope information as a second reference point, and specifies a second triangle including the first vertex, the second vertex, and the second reference point.

In step S204, both the first triangle and the second triangle may be specified, or only one of the first triangle and the second triangle may be specified.

In step S205, the CPU 51 calculates various types of information of the specified triangles.

For example, the CPU 51 calculates the areas of the first triangle and the second triangle specified in step S204. Note that the CPU 51 may calculate the areas of both the first triangle and the second triangle, or may specify only one of the areas.

The various types of information of the triangles calculated in step S205 are not limited to the areas of the first triangle and the second triangle, and may be other pieces of information representing features of the triangles. For example, the angle of the interior angle or the length of a side of the triangle may be calculated. In addition, the area of a figure constituting the first triangle or the second triangle may be calculated. Furthermore, various types of information to be calculated are not limited to one type, and a plurality of different types of various types of information may be calculated.

By the above second example of the analysis processing of Fig. 15, the various types of information of the triangles specified in the envelope information are calculated.

In the processing of calculating an evaluation index (step S104) subsequent to the second example of the analysis processing (step S103 in Fig. 8), an evaluation index is calculated using various types of information calculated in the analysis processing. For example, it is conceivable to obtain the evaluation index by using calculation results such as a sum, a difference, and a ratio of the calculated various types of information.

Furthermore, in the analysis examples of Figs. 13 and 14, the areas of the two triangles of the first triangle and the second triangle, the angles of the vertexes, and the lengths of respective sides are treated independently, but they are essentially correlated, and a method of further improving the detection accuracy by combining them is also effective. Therefore, the evaluation index may be calculated using various types of information.

Note that, in the analysis examples in Figs. 13 to 15, the example of calculating the areas of the two triangles, the angles of the vertices, and the lengths of the respective sides specified in the envelope information has been described, but it is also possible to perform graphic analysis as one quadrangle by combining the two specified triangles. Furthermore, it is also conceivable to extract feature points on the envelope more finely by providing not only the zero cross point of the first differentiation but also a threshold for the amount of change in the envelope information. Thus, it is also possible to develop a detailed figure analysis from a higher-order polygon.

<5.4. Third example of analysis processing>

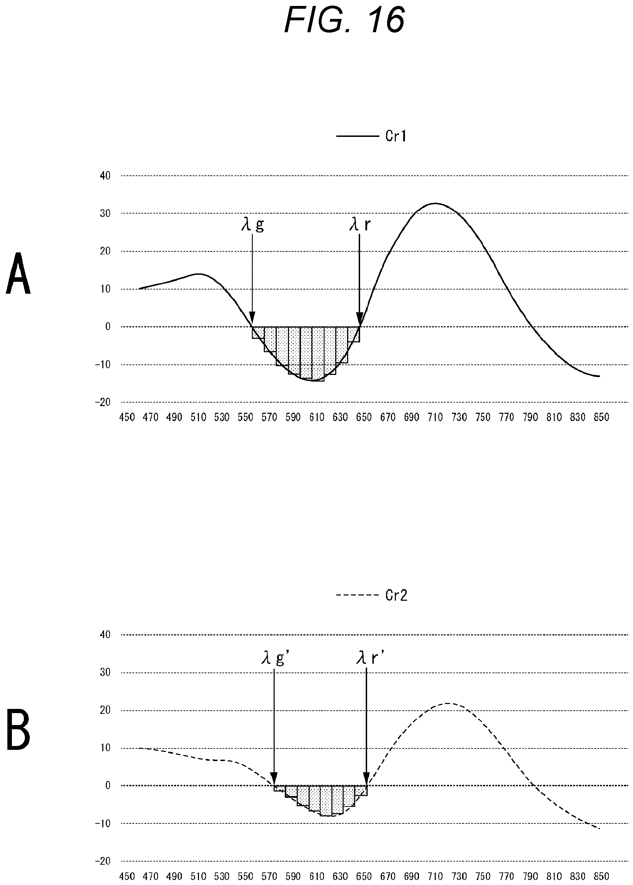

A third example of the analysis processing will be described with reference to Figs. 16 to 19. In the third example of the analysis processing, the first derivative information of the envelope information is analyzed.

Fig. 16 illustrates an analysis example of the first derivative information of Fig. 10 obtained by the first differentiation of the envelope information of Fig. 11. Specifically, Fig. 16A illustrates an analysis example of the differential curve Cr1 which is the first derivative information of the envelope En1 of a leaf of a healthy plant, and Fig. 16B illustrates an analysis example of the differential curve Cr2 which is the first derivative information of the envelope En2 of a leaf of a damaged plant.

In the analysis example of Fig. 16, a composite product of the first derivative information from the peak wavelength to the bottom wavelength is calculated.

In the differential curve Cr1 illustrated in Fig. 16A, a composite product AOCg-r of the first derivative information in the range from the peak wavelength $\lambda$g to the bottom wavelength $\lambda$r can be approximated by the following (Expression 15). Furthermore, in the differential curve Cr2 illustrated in Fig. 16B, a composite product AOCg'-r' of the first derivative information in the range from the peak wavelength $\lambda$g' to the bottom wavelength $\lambda$r' can be approximated by (Expression 16).

[Mathematical 5]

$$AOC_{g-r} = 0.5 \times \sum_{x=\lambda g}^{\lambda r-10} (\lambda_{x+10} - \lambda_x) \times (P_{x+10} + P_x) \quad \text{... (Expression 15)}$$

$$AOC_{g'-r'} = 0.5 \times \sum_{x=\lambda g'}^{\lambda r'-10} (\lambda_{x+10} - \lambda_x) \times (P_{x+10} + P_x) \quad \text{... (Expression 16)}$$

The composite product AOCg-r and the composite product AOCg'-r' calculated by the above calculation expressions can be regarded as representing the shapes of the envelopes from green peaks to red bottoms of reflection spectra indicated by plants in different states. Thus, for example, it is conceivable to use the composite product of the first derivative information from the peak wavelength to the bottom wavelength, and calculation results such as a difference, a distribution, and a ratio of the composite product for specifying the type and state of the plant. That is, the composite product of the first derivative information from the peak wavelength to the bottom wavelength can be calculated, and the evaluation index of vegetation can be calculated using the calculated composite product.

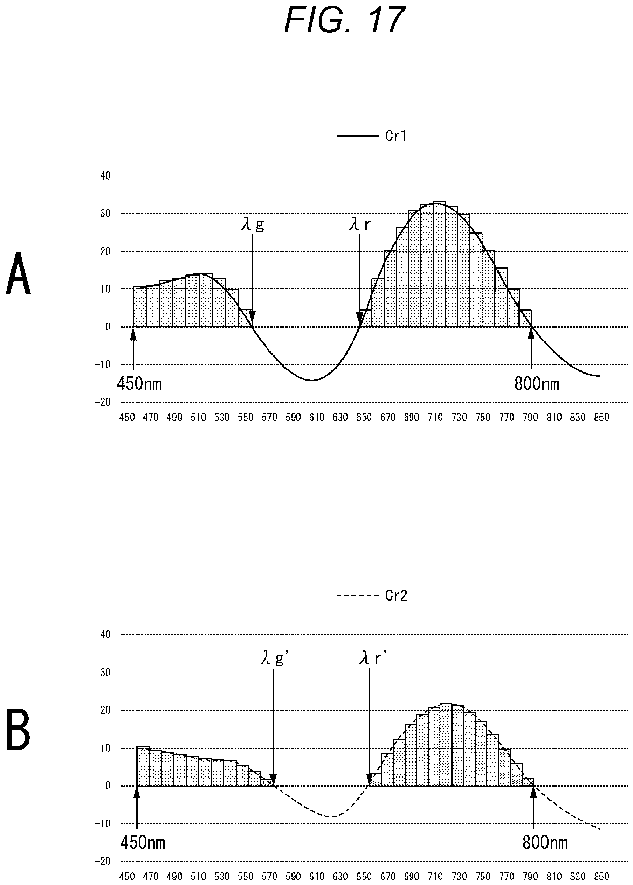

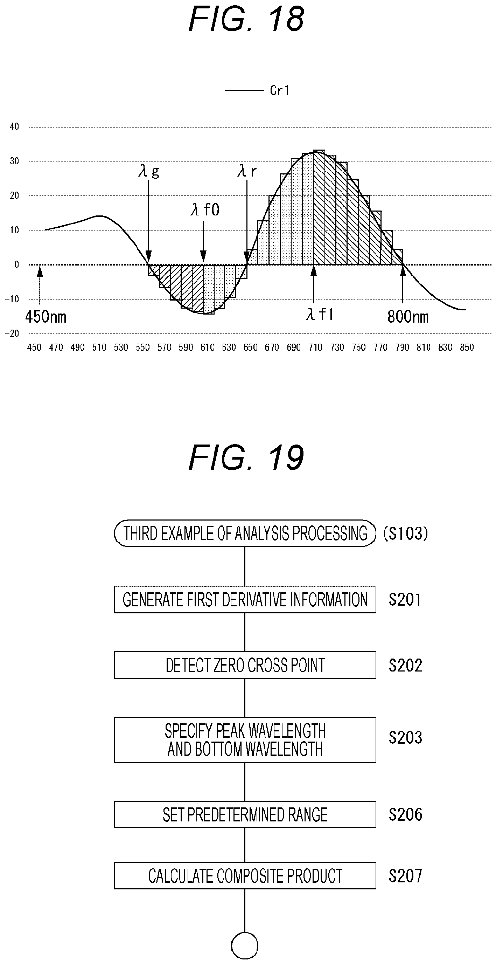

Moreover, by applying a similar calculation method not only to the range from the peak wavelength to the bottom wavelength but also to other ranges, it is also possible to express the feature of the shape of the envelope as the composite product of the first derivative information over the entire region of the reflection spectrum. Hereinafter, an example of calculating the composite product of other ranges will be described with reference to Figs. 17 and 18.

Fig. 17A illustrates an analysis example of the differential curve Cr1 which is the first derivative information of the envelope En1 of a leaf of a healthy plant. Fig. 17B illustrates an analysis example of the differential curve Cr2 which is the first derivative information of the envelope En2 of the leaf of the damaged plant.

In the analysis example of Fig. 17, the first specific wavelength and the second specific wavelength are selected, and the first derivative information is divided into three regions using the selected specific wavelengths, the peak wavelength, and the bottom wavelength.

The first specific wavelength is, for example, a wavelength on the short wavelength side, and 450 nm is selected in this example. The second specific wavelength is, for example, a wavelength on the long wavelength side, and 800 nm is selected in this example. Thus, in the analysis example of Fig. 17, the differential curves Cr1 and Cr2 are divided into a region in the range from 450 nm to the peak wavelengths $\lambda g$ and $Xg'$, a region in the range from the peak wavelengths $\lambda g$ and $\lambda g'$ to the bottom wavelengths $\lambda r$ and $\lambda r'$, and a region in the range from the bottom wavelengths $\lambda r$ and $Xr'$ to 800 nm.

As the first specific wavelength and the second specific wavelength, it is conceivable to select a desired wavelength according to the purpose of analysis.

Also in the case of the analysis example of Fig. 17, by applying calculation similar to that of the analysis example of Fig. 16 to each region, it is possible to obtain the composite product of the first derivative information in each region. Specifically, the composite products AUC450-g and AUC450-g' of the regions in the range from 450 nm to the peak wavelengths $\lambda g$ and $\lambda g'$ in respective pieces of first derivative information in Figs. 17A and 17B can be approximated by (Expression 17) and (Expression 18), respectively. Furthermore, the composite products AUCr-800 and AUCr'-800 of the regions in the range from the bottom wavelengths $\lambda r$ and $\lambda r'$ to 800 nm in the respective pieces of first derivative information in Figs. 17A and 17B can be approximated by (Expression 19) and (Expression 20), respectively.

[Mathematical 6]

$$\text{AUC}_{450\text{-g}} = 0.5 \times \sum_{x=450}^{\lambda g-10} (\lambda_{x+10} - \lambda_x) \times (P_{x+10} + P_x) \quad \text{... (Expression 17)}$$

$$\text{AUC}_{450\text{-g'}} = 0.5 \times \sum_{x=450}^{\lambda g'-10} (\lambda_{x+10} - \lambda_x) \times (P_{x+10} + P_x) \quad \text{... (Expression 18)}$$

$$\text{AUC}_{r\text{-800}} = 0.5 \times \sum_{x=\lambda r}^{790} (\lambda_{x+10} - \lambda_x) \times (P_{x+10} + P_x) \quad \text{... (Expression 19)}$$

$$\text{AUC}_{r'\text{-800}} = 0.5 \times \sum_{x=\lambda r'}^{790} (\lambda_{x+10} - \lambda_x) \times (P_{x+10} + P_x) \quad \text{... (Expression 20)}$$

When the composite products AOCg-r and AOCg'-r' of the regions from the peak wavelengths $\lambda g$ and $\lambda g'$ to the bottom wavelengths $\lambda r$ and $\lambda r'$ described with reference to Figs. 16A and 16B are added to the composite products calculated as described above, each of the envelope En1 and the envelope En2 can be expressed as a combination of the composite products of the three types of first derivative information.

In general, in damaged plants, the amplitude between the peak and the bottom of the envelope of the reflection spectrum tends to decrease. Thus, the sum of the composite products AUC450-g', AOCg'-r', and AUCr'-800 of the three regions in the first derivative information of the decaying plant is smaller than the sum of the composite products of the three regions in the first derivative information of the healthy plant.

Furthermore, it can be said that the distribution and ratio of the composite products of the three regions in the first derivative information also have a meaning as a means for expressing the type and state of the plant. Moreover, it is also possible to analyze tendencies of differences between two plants of different types or states by performing comparison of composite products of regions in the range from the peak wavelength to the bottom wavelength, comparison of composite products of regions in the range from 450 nm to the peak wavelength, comparison of composite products of regions in the range from the bottom wavelength to 800 nm, and the like. That is, at least one of the composite product of the first derivative information from the peak wavelength to the first specific wavelength or the composite product of the first derivative information from the bottom wavelength to the second specific wavelength is calculated, and the evaluation index can be calculated using the calculated composite product.

Note that, by providing more specific wavelengths, it is possible to subdivide the region of the first derivative information and analyze a composite product of more regions. A specific analysis example will be described with reference to Fig. 18.

Fig. 18 illustrates an analysis example of the differential curve Cr1 of the first derivative information of the envelope En1 of a healthy plant.

In this analysis example, a wavelength $\lambda f0$ corresponding to an inflection point located between the peak wavelength $\lambda g$ and the bottom wavelength $\lambda r$ is selected as an additional specific wavelength. The additional specific wavelength $\lambda f0$ divides a region from the peak wavelength $\lambda g$ to the bottom wavelength $\lambda r$ into regions before and after the region.

Moreover, a wavelength $\lambda f1$ corresponding to an inflection point located between the bottom wavelength $\lambda r$ and 800 nm is selected as an additional specific wavelength. The additional specific wavelength $\lambda f1$ divides the region from the bottom wavelength $\lambda r$ to 800 nm into regions before and after this wavelength.

It is conceivable that composite products are also calculated for a region in the range from the peak wavelength $\lambda g$ to the additional specific wavelength $\lambda f0$, a region in the range from the additional specific wavelength $\lambda f0$ to the bottom wavelength $\lambda r$, a region in the range from the bottom wavelength $\lambda r$ to the specific wavelength $\lambda f1$, and a region in the range from the specific wavelength $\lambda f1$ to 800 nm, a difference, distribution, comparison, and the like of the composite products are performed, and tendencies of differences thereof are analyzed. That is, it is possible to calculate the composite product of the first derivative information from at least one of the peak wavelength or the bottom wavelength to the wavelength corresponding to the inflection point and to calculate the evaluation index using the calculated composite product.

As a specific processing example of the third example of the analysis processing of analyzing the first derivative information described with reference to Figs. 17 and 18, the processing example of Fig. 19 will be described. This illustrates a detailed example of the analysis processing in step S103 in Fig. 8.

The CPU 51 performs each processing of steps S201, S202, and S203, and specifies the peak wavelength and the bottom wavelength in the envelope information.

In step S206, the CPU 51 sets a predetermined range for calculating the composite product.

For example, the CPU 51 sets the range from the peak wavelength to the bottom wavelength to the predetermined range. Furthermore, the CPU 51 may select a specific wavelength and set the predetermined range using the selected specific wavelength. For example, the CPU 51 may select the specific wavelength as the first specific wavelength and the second specific wavelength, and set each of the range from the first specific wavelength to the peak wavelength and the range from the bottom wavelength to the second specific wavelength to the predetermined range.

Note that the predetermined range is not limited to one, and a plurality of predetermined ranges may be set by selecting a plurality of wavelengths as specific wavelengths.

In step S207, the CPU 51 calculates the composite product in the predetermined range in the first derivative information.

For example, in a case where the range from the peak wavelength to the bottom wavelength is set to the predetermined range in step S206, the CPU 51 calculates the composite product of the first derivative information from the peak wavelength to the bottom wavelength. In a case where the plurality of predetermined ranges is set in step S206, the CPU 51 calculates the composite product of the plurality of predetermined ranges in the first derivative information.

By the above third example of the analysis processing of Fig. 19, the composite product of the first derivative information in the predetermined range is calculated.

In the evaluation index calculation processing (step S104) subsequent to the third example of the analysis processing (step S103 in Fig. 8), the evaluation index is calculated using the calculated composite product. For example, it is conceivable to calculate the evaluation index by using the calculated composite product and calculation results such as a sum, a difference, a ratio, and a distribution of the calculated composite product.

The first to third processing examples have been described above for the analysis processing in step S103.

By the analysis processing of the present embodiment, it is possible to quantify and express the features of the envelope information in which the reflection characteristics of the subject are developed. For example, the envelope information of a complicated reflection spectrum can be converted into a polygon by a simple mathematical expression using representative feature points, and quantitatively expressed by the area, the sizes of interior angles, and the lengths of respective sides, or can be converted into the first derivative information, divided into a plurality of regions using the zero cross point, the specific wavelength, and the inflection point, and quantitatively expressed by the composite product.

This makes it possible to visualize sensuous empirical knowledge about the hue of the subject as formal knowledge.

It is conceivable that the evaluation index calculated on the basis of the above analysis processing is presented as map information. Specifically, it is conceivable to present the situation of the target range as the envelope information of the reflection spectrum and a vegetation index map obtained by converting the envelope information into a simple expression. For example, it is conceivable to generate and present a color map visualizing the sum, difference, and ratio of the area TΔRE of the first triangle and the area TΔVIS of the second triangle, the angles and ratios of the interior angles A1, A2, and A3, or the lengths and ratios of the sides L1, L2, and L3, or a color map visualizing the area, sum, distribution, and ratio of the composite product in a predetermined range of the first derivative information. By presenting such map information, the user can look down on the entire farm field.

Note that the above-described presentation mode of the evaluation index is an example, and the evaluation index may be presented in another mode.

<5.5. Second arithmetic processing: compression storage>

In the second arithmetic processing, arithmetic processing for compressing and storing a multiband image will be described.

In the multiband image, the data size increases according to the number of bands constituting the image.

For example, the structure of the multiband image can be expressed as three-dimensional information of an image cube shape in which spatial information of an imaging range are expressed by two axes of x and y, and spectrum data is developed on a z axis, but a data size (hereinafter, also referred to as a data amount) increases in proportion to an increase in the number of bands constituting the spectrum data. For this reason, a large-capacity storage is required to store multiband images with a large number of bands, which may lead to an increase in cost.

Accordingly, in the present embodiment, arithmetic processing is performed on the multiband image, and information with which the envelope information can be reproduced is stored while reducing the data amount.

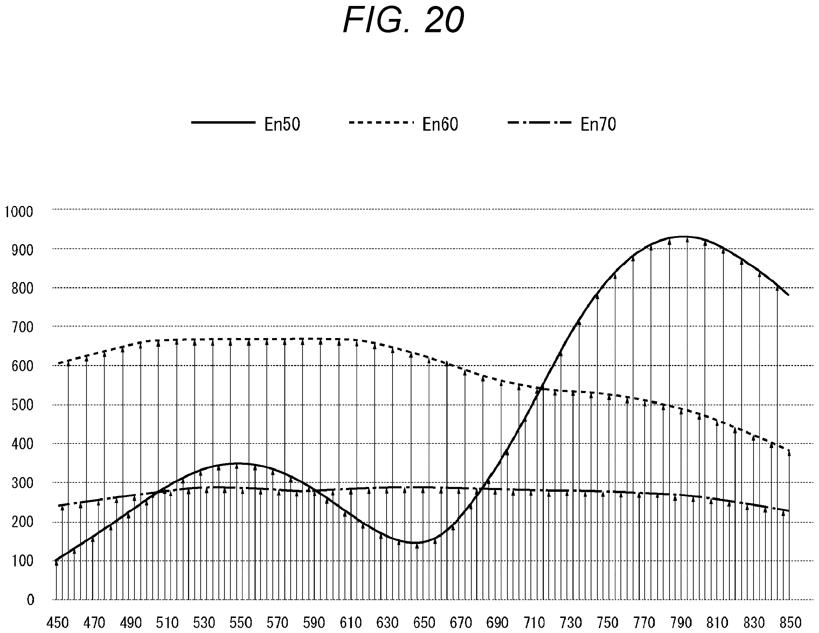

A specific example of the data amount reduction of the multiband image will be described with reference to Figs. 20 to 22.

Fig. 20 illustrates envelope information of a 41-layer multiband image acquired in increments of 10 nm with a constant half width value in the wavelength range from visible light of 450 nm to 850 nm to the near-infrared range. Envelopes En50, En60, and En70 in Fig. 20 represent envelope information of ROIs for subjects of plants, dry soil, and wet soil, respectively.

In the multiband image of this example, as an example, the word length is set to 10 bits (0 to 1023), and intensity information of the reflection spectrum of each subject is expressed as an absolute value of the amplitude from 0. For this reason, the data amount of one multiband image is set to 10 bits $\times$ 41 layers $\times$ the number of pixels regardless of the characteristics of the subject.

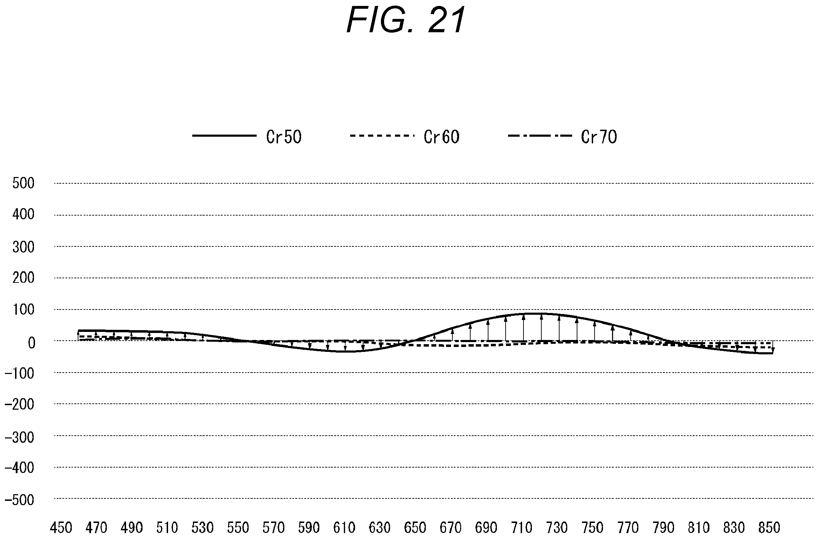

Fig. 21 illustrates first derivative information obtained by first differentiating the envelope information of Fig. 20. Differential curves Cr50, Cr60, and Cr70 in Fig. 21 represent the first derivative information of the envelopes En50, En60, and En70 in Fig. 20, respectively.

By first differentiating the envelope information, difference information of intensity between adjacent wavelength bands (between adjacent bands) starting from a reference wavelength band (reference band) can be obtained. In the processing example of Fig. 21, a wavelength band of 450 nm is selected as a reference band, and the first derivative information between adjacent bands calculated with the reference band as a starting point, that is, difference information (460 nm - 450 nm, 470 nm - 460 nm, 480 nm - 470 nm,... 840 nm - 830 nm, and 850 nm - 840 nm) between 40 sets of adjacent bands is calculated.

In the processing example of Fig. 21, instead of storing the envelope information for all the bands illustrated in Fig. 20, the intensity information of the reference band and difference information between bands other than the reference band and adjacent bands are stored.

The amount of change between adjacent bands in the envelope information is limited, and thus the numerical value representing the difference information between the adjacent bands is smaller than the numerical value representing the intensity information of each band as an absolute value. Therefore, the amplitude in the difference information between adjacent bands is greatly compressed. Furthermore, since the wavelength dependency of the reflection spectrum is weak depending on the subject to be imaged such as soil, the difference information between the bands is further reduced. Thus, when the difference information obtained by the first differentiation is stored, the bit depth required to store the amplitude value can be reduced. Therefore, the amount of data can be significantly reduced as compared with the case of storing the envelope information illustrated in Fig. 20 while storing the information representing the features of the envelope information.

Furthermore, when the first differentiation is reapplied to the stored information in this manner, the original envelope information can be easily reproduced. Moreover, by recalculating all first derivatives from the envelope information of the reference band to the specific band, the image data of the specific band can be reproduced.

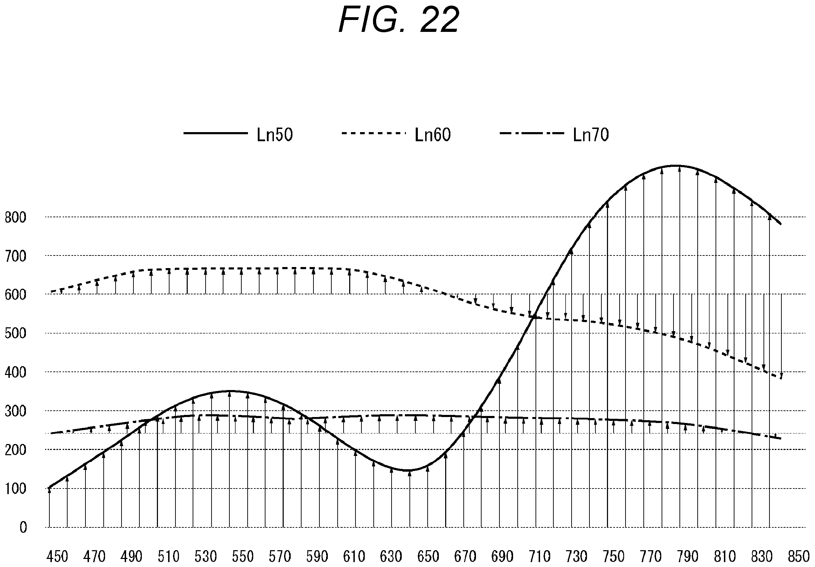

Fig. 22 illustrates difference information between the reference band and each of the other bands calculated from the envelope information of Fig. 20. In the processing example of Fig. 22, the difference information of the intensity between the reference band and each of the other bands is calculated using the wavelength band of 450 nm as the reference band. Difference lines Ln50, Ln60, and Ln70 in the drawing are curves obtained by plotting values of the difference information calculated using the envelopes En50, En60, and En70 in Fig. 20, respectively.

In the processing example of Fig. 22, instead of storing the envelope information for all the bands illustrated in Fig. 20, the intensity information of the reference band and difference information between bands other than the reference band and the reference band are stored.

Also in the compression example of Fig. 22, the numerical value representing the difference information from the reference band is smaller than the numerical value representing the intensity information of each band as an absolute value, and thus the amplitude in the difference information is greatly compressed. Thus, the bit depth required to store the amplitude value can be reduced. Therefore, although the amount of data to be reduced is smaller than that in the compression example of Fig. 21, the amount of data can be reduced as compared with the amount of data of the envelope information illustrated in Fig. 20.

When the calculation is performed using the stored information in this manner, the original envelope information can be easily reproduced. Furthermore, in the processing example of Fig. 22, since the intensity information of all the bands other than the reference band is uniquely defined as the difference information from the reference band, the image data of the specific band can be reproduced by a calculation using only the difference information between the envelope information of the reference band and the specific band. That is, the image data of the specific band can be reproduced by a simpler calculation than that in Fig. 21. Furthermore, a calculation between wavelengths of a plurality of specific bands can be expressed as a direct difference of difference information from each reference band.

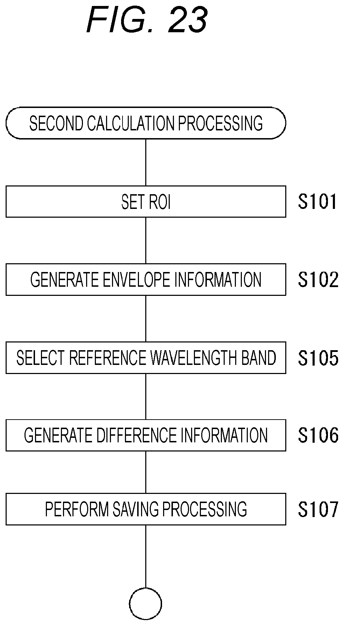

With reference to Fig. 23, a flow of arithmetic processing for compressing and storing the envelope information in the second arithmetic processing of the present embodiment will be described. The processing illustrated in Fig. 23 is achieved by the CPU 51 having the function of the arithmetic unit 3 illustrated in Fig. 3. Note that processes with similar step numbers to those of the processes described in the first arithmetic processing of Fig. 8 will not be described repeatedly.

The CPU 51 performs respective processes of steps S101 and S102, acquires a multiband image to be processed, sets an ROI, and generates the envelope information in the ROI.

In step S105, the CPU 51 selects a specific wavelength band as the reference wavelength band.

In step S106, the CPU 51 generates the difference information.

For example, as described with reference to Fig. 21, the CPU 51 obtains the difference information between the adjacent wavelength bands starting from the selected specific wavelength band by the first differentiation. Furthermore, as described with reference to Fig. 22, the CPU 51 may obtain the difference information from the reference wavelength band for the wavelength band other than the specific wavelength band.

In step S107, the CPU 51 performs a saving process using the generated difference information.

For example, the CPU 51 stores the intensity information in the envelope information of the specific wavelength band and the difference information between wavelength bands other than the specific wavelength band and adjacent wavelength bands. Furthermore, the CPU 51 stores the intensity information of the specific wavelength band and the difference information between other wavelength bands and the reference wavelength band.

By the above processing, the multiband image is compressed and stored.

Note that the above processing is an example, and other processing examples are also conceivable.

<6. Summary and modification example>

In the above embodiments, the following effects can be obtained.

The information processing device 1 according to the embodiment includes the signal processing unit 2 that generates multiband data (multiband individual image Mi or mapping image Mm) including a plurality of pieces of band data including detected band data of a plurality of wavelength bands and band data of a wavelength band reconstructed from the detected band data, and the arithmetic unit 3 that generates envelope information (an envelope En or the like) of spectrum data represented by the multiband data.

By reconstructing band data from the detected band data of the plurality of wavelength bands, the multiband data including band data of more types of wavelength bands than the wavelength bands acquired by detection is obtained. The envelope information of the spectrum data represented by such multiband data enables sensing according to various types and states of the subject.

For example, in sensing the vegetation state of the farm field, NDVI, which is a vegetation index that has been used historically, indicates only the contrast between the reflection and absorption characteristics of near-infrared light and red, whereas the multiband data generated by the information processing device 1 of the embodiment can express spectrum data reflecting various types and states of plants as subjects. The envelope information of such spectrum data can be used for management of the farm field, for example, extraction of specific problems such as poor growth, diseases, pests, and weed detection.

Note that, upon reconstructing band data from band data of detected wavelength band, the band data of detected wavelength band and other undetected wavelength bands may be reconstructed, or only the band data of other undetected wavelength bands may be reconstructed.

In the embodiment, as described in detail in the first arithmetic processing and the second arithmetic processing, the example has been described in which the arithmetic unit 3 generates first derivative information of the envelope information (see Fig. 11 and the like).

By generating the first derivative information of the envelope information, information representing features of the envelope information can be obtained. Moreover, from the viewpoint of the influence of a light source spectrum, in the first differentiation that is a difference calculation between neighboring wavelength bands having strong correlation, it is possible to extract a feature point such as an inflection point excluding the influence except for a case of a light source with an emission line spectrum.

Furthermore, by generating the first derivative information of the envelope information, information representing the features of the envelope information with a smaller amplitude than the envelope information is obtained.

In the embodiment, as described in detail in the first example of the analysis processing, the example has been described in which the arithmetic unit 3 detects the zero cross points Pz1 and Pz2 of the first derivative information, specifies, as a peak wavelength of the envelope information, the wavelength $\lambda g$ of the zero cross point Pz1 in middle of transition of the first derivative information from positive to negative, and specifies, as a bottom wavelength of the envelope information, the wavelength $\lambda r$ of the zero cross point Pz2 in middle of transition of the first derivative information from negative to positive (see Figs. 10 to 12).

By specifying the peak wavelength and the bottom wavelength in this manner, the features of the envelope information can be quantitatively expressed. Specifically, a value of a wavelength corresponding to a peak and a bottom in the envelope information can be obtained.

In the embodiment, as described in detail in the first example of the analysis processing, the arithmetic unit 3 calculates an evaluation index using at least one of the peak wavelength or the bottom wavelength (see Figs. 10 to 12).

By calculating the evaluation index based on the peak wavelength and the bottom wavelength, the type and state of the subject can be specified using the feature represented by the peak wavelength and the bottom wavelength. For example, it is conceivable to specify the type and state of vegetation.

In the embodiment, as described in detail in the second example of the analysis processing, the example has been described (see Figs. 13 to 15) in which the arithmetic unit 3 sets a value corresponding to the peak wavelength obtained from the envelope information as a first vertex Pg, sets a value corresponding to the bottom wavelength obtained from the envelope information as a second vertex Pr, sets a value corresponding to a predetermined wavelength (first predetermined wavelength $\lambda ir$) located on a longer wavelength side than the peak wavelength and the bottom wavelength obtained from the envelope information as a first reference point Pir, sets a value corresponding to a predetermined wavelength (second predetermined wavelength $\lambda b$) located on a shorter wavelength side than the peak wavelength and the bottom wavelength obtained from the envelope information as a second reference point Pb, and specifies the first triangle $\Delta RE$ including the first vertex Pg, the second vertex Pr, and the first reference point Pir, and the second triangle $\Delta VIS$ including the first vertex Pg, the second vertex Pr, and the second reference point Pb.

By specifying the first triangle and the second triangle, the features of the envelope information can be expressed using figures. By setting the shape of a specified figure as an analysis target, analysis from various viewpoints utilizing characteristics of the figure becomes possible. For example, as described with reference to Figs. 13 and 14, the area, the angles of interior angles, and the lengths of sides can be obtained for the specified triangle. Furthermore, it is conceivable to obtain the area of the figure constituting the specified triangle. Note that the viewpoint of analysis is not limited to the above, and it is also conceivable to analyze a triangle from other viewpoints.

In the embodiment, as described in detail in the second example of the analysis processing, the example has been described in which the arithmetic unit 3 calculates an area of at least one of the first triangle $\Delta RE$ or the second triangle $\Delta VIS$, and calculates an evaluation index using the calculated area (see Figs. 13 and 15).

By calculating the evaluation index based on the areas of the first triangle and the second triangle, the type and state of the subject can be specified using the feature represented by the areas of the respective triangles.

In the embodiment, as described in detail in the second example of the analysis processing, the example has been described in which the arithmetic unit 3 calculates an angle of at least one interior angle (interior angles A1, A2, and A3) in at least one of the first triangle $\Delta RE$ or the second triangle $\Delta VIS$, and calculates the evaluation index using the calculated angle (see Figs. 14 and 15).

By calculating the evaluation index based on the angle of interior angles of the first triangle or the second triangle, the type and state of the subject can be specified using the feature represented by the angle.

In the embodiment, as described in detail in the second example of the analysis processing, the example has been described in which the arithmetic unit 3 calculates a length of at least one side (side L1, L2, and L3) of at least one of the first triangle ΔRE or the second triangle ΔVIS, and calculates an evaluation index using the calculated length (see Figs. 14 and 15).

By calculating the evaluation index based on the lengths of sides of the first triangle and the second triangle, the type and state of the subject can be specified using the feature represented by the lengths of the sides.

In the embodiment, as described in detail in the third example of the analysis processing, the example has been described in which the arithmetic unit 3 calculates a composite product of the first derivative information from the peak wavelength to the bottom wavelength, and calculates an evaluation index using the calculated composite product (see Figs. 16 to 19).

By calculating the composite product of the range from the peak wavelength to the bottom wavelength in the first derivative information, the type and state of the subject can be specified using the feature represented in the first derivative information.

In the embodiment, as described in detail in the third example of the analysis processing, the example has been described in which the arithmetic unit 3 calculates at least one of a composite product of the first derivative information from the peak wavelength to a first wavelength (first specific wavelength) or a composite product of the first derivative information from the bottom wavelength to a second wavelength (second specific wavelength), and calculates an evaluation index using the calculated composite product (see Figs. 17 and 19).

In the first derivative information, by calculating the composite product of ranges defined by the first wavelength and the second wavelength in addition to the peak wavelength and the bottom wavelength, it is possible to analyze the feature represented in the first derivative information in more detail and specify the type and state of the subject.

In the embodiment, as described in detail in the third example of the analysis processing, the example has been described in which the arithmetic unit 3 calculates a composite product of the first derivative information from at least one of the peak wavelength or the bottom wavelength to a wavelength (the specific wavelength $\lambda f0$ or the specific wavelength $\lambda f1$) corresponding to an inflection point of the first derivative information, and calculates an evaluation index using the calculated composite product (see Figs. 18 and 19).

In the first derivative information, by calculating the composite product of a range defined by the wavelength corresponding to the inflection point in addition to the peak wavelength and the bottom wavelength, it is possible to analyze the feature represented in the first derivative information in more detail and specify the type and state of the subject.

In the embodiment, as described in detail in the second arithmetic processing, the example has been described in which the arithmetic unit 3 stores intensity information of a specific wavelength band (reference band) and stores difference information from an adjacent wavelength band of a wavelength band other than the specific wavelength band (band other than the reference band) (see Figs. 21 and 23).

By storing the intensity information of the specific wavelength band and the difference information from the adjacent wavelength band of the wavelength band other than the specific wavelength band, the information with which the envelope information can be reproduced can be compressed and stored in a state where the data amount is reduced. The reduction in the amount of data makes it possible to reduce the amount of storage required to store data and reduce costs.

In the embodiment, as described in detail in the second arithmetic processing, the arithmetic unit 3 calculates difference information of envelope information between a specific wavelength band (reference band) and a wavelength band other than the specific wavelength band (band other than the reference band), stores intensity information of the specific wavelength band, and stores the difference information of a wavelength band other than the specific wavelength band (see Figs. 22 and 23).

By storing the intensity information of the specific wavelength band and the difference information calculated for the wavelength band other than the specific wavelength band, the information with which the envelope information can be reproduced can be compressed and stored in a state where the data amount is reduced. The reduction in the amount of data makes it possible to reduce the amount of storage required to store data and reduce costs.

In the embodiment, the example has been described in which the detected band data is data obtained by capturing an image of a farm field (farm field 210).

Thus, the multiband data is generated using the band data obtained by capturing an image of the farm field, and the envelope information of the multiband data in the farm field can be obtained. That is, sensing that can be used for farm field management can be performed.

The farm field is not limited to a cultivated land of the outdoor farm land, and may be a site for hydroponic cultivation, house cultivation, or the like.

Furthermore, in the embodiment, the example of aerial imaging using the imaging device 250 mounted on the flying object 200 has been described, but the application range of the present disclosure is not limited thereto. For example, the present invention can be widely applied to sensing using a field sensor camera installed in a farm field or a house, a movable sensor camera mounted on an agricultural machine such as a tractor or an irrigation pivot, a remote sensing camera mounted on a manned airplane, or a multiband sensor mounted on a satellite.

In the embodiment, the example in which the evaluation index is a vegetation evaluation index has been described.

Thus, it is possible to calculate the evaluation index according to various types and states of plants.

In the embodiment, the example of identifying the type of the plant and the state of the plant has been described, but the application range of the present disclosure is not limited thereto, and for example, in the farm field, the present disclosure can also be applied to identification of the soil and the crop, and identification of the type and state of the soil. Furthermore, the present invention can also be applied to identification of fruits, leaves, and stems, identification of the degree of maturation of fruits, and the like. Moreover, from the viewpoint of measuring absorption characteristics and transmission and scattering characteristics with respect to the wavelength spectrum of the subject, the present disclosure can also be applied to fields other than the farm field. Specifically, it is possible to apply to many embodiments by optimizing the location of the information processing device or the program of the present disclosure to an appropriate position, such as an action that a human normally relies on vision for identification, for example, selection by color inspection in a factory or non-defective product determination at the time of purchase in a fresh food selling area.

In the embodiment, the case where the ROI is set in the multiband image, and the calculation of the evaluation index and the arithmetic processing of the compressed storage are performed on the envelope information in the ROI has been described (see Figs. 8 and 23). Although the calculation between layers in the multiband image requires strong processing capability, the processing capability required for the calculation can be reduced by performing the arithmetic processing only on the envelope information in the set ROI.

Moreover, for example, it is conceivable that some ROIs are set in advance from a multiband image, the envelope information and the first derivative information are generated only for the set ROIs, envelope information of a band near an inflection point obtained from the first derivative information is selectively used in evaluation index calculation, and the difference information obtained by applying the first differentiation again to the envelope information is used in compression storage. Thus, it is possible to greatly compress the data amount while storing information with which the envelope information can be reproduced, and it is possible to quickly present the map information based on the evaluation index even under an environment of limited calculation resources.

Furthermore, it is also conceivable to store map information based on the generated evaluation index instead of the multiband image. Since the map information is compressed information while including main information of the envelope information, a required storage amount and a storage cost can be reduced.

The program according to the embodiment is a program for causing a CPU, a DSP, or the like, or a device including the CPU, the DSP, or the like, for example, to execute a process of generating multiband data including a plurality of pieces of band data including detected band data of a plurality of wavelength bands and band data of a wavelength band reconstructed from the detected band data, and a process of generating envelope information of spectrum data represented by the multiband data.

With such a program, the above-described provision of the information processing device 1 can be widely achieved. For example, it is also assumed that the program is provided as an update program or the like of the information processing device 1.

These programs can be recorded in advance in an HDD as a storage medium built in a device such as a computer device, a ROM in a microcomputer having a CPU, or the like.

Alternatively, the program can be temporarily or permanently stored (recorded) in a removable storage medium such as a flexible disk, a compact disc read only memory (CD-ROM), a magneto optical (MO) disk, a digital versatile disc (DVD), a Blu-ray disc (registered trademark), a magnetic disk, a semiconductor memory, or a memory card. Such a removable storage medium can be provided as what is called package software.

Furthermore, such a program can be installed from the removable storage medium into a personal computer or the like, or can be downloaded from a download site via a network such as a local area network (LAN) or the Internet.

Furthermore, such a program is suitable for providing the information processing device 1 of the embodiment in a wide range. For example, the functions of the information processing device 1 of the present disclosure can be implemented on a cloud network by downloading the program to a server that provides a cloud computing service.

Note that effects described in the present description are merely examples and are not limited, and other effects may be provided.

Note that the present technology can employ configurations as follows.

(1) An information processing device, including:

a signal processing unit that generates multiband data including a plurality of pieces of band data including detected band data of a plurality of wavelength bands and band data of a wavelength band reconstructed from the detected band data; and
an arithmetic unit that generates envelope information of spectrum data represented by the multiband data.

(2) The information processing device according to (1) above, in which
the arithmetic unit generates first derivative information of the envelope information.
(3) The information processing device according to (2) above, in which

the arithmetic unit
detects a zero cross point of the first derivative information,
specifies, as a peak wavelength of the envelope information, a wavelength of a zero cross point in middle of transition of the first derivative information from positive to negative, and
specifies, as a bottom wavelength of the envelope information, a wavelength of a zero cross point in middle of transition of the first derivative information from negative to positive.

(4) The information processing device according to (3) above, in which

the arithmetic unit
calculates an evaluation index using at least one of the peak wavelength or the bottom wavelength.

(5) The information processing device according to (3) or (4) above, in which

the arithmetic unit
sets a value corresponding to the peak wavelength obtained from the envelope information as a first vertex,
sets a value corresponding to the bottom wavelength obtained from the envelope information as a second vertex,
sets a value corresponding to a predetermined wavelength located on a longer wavelength side than the peak wavelength and the bottom wavelength obtained from the envelope information as a first reference point,
sets a value corresponding to a predetermined wavelength located on a shorter wavelength side than the peak wavelength and the bottom wavelength obtained from the envelope information as a second reference point, and
specifies a first triangle including the first vertex, the second vertex, and the first reference point, and a second triangle including the first vertex, the second vertex, and the second reference point.

(6) The information processing device according to (5) above, in which

the arithmetic unit
calculates an area of at least one of the first triangle or the second triangle, and
calculates an evaluation index using calculated area.

(7) The information processing device according to (5) or (6) above, in which

the arithmetic unit
calculates an angle of at least one interior angle in at least one of the first triangle or the second triangle, and
calculates an evaluation index using the calculated angle.

(8) The information processing device according to any one of (5) to (7) above, in which

the arithmetic unit
calculates a length of at least one side of at least one of the first triangle or the second triangle, and
calculates an evaluation index using the calculated length.

(9) The information processing device according to any one of (3) to (8) above, in which

the arithmetic unit
calculates a composite product of the first derivative information from the peak wavelength to the bottom wavelength, and
calculates an evaluation index using the calculated composite product.

(10) The information processing device according to any one of (3) to (9) above, in which

the arithmetic unit
calculates at least one of a composite product of the first derivative information from the peak wavelength to a first wavelength or a composite product of the first derivative information from the bottom wavelength to a second wavelength, and
calculates an evaluation index using the calculated composite product.

(11) The information processing device according to any one of (3) to (10) above, in which

the arithmetic unit
calculates a composite product of the first derivative information from at least one of the peak wavelength or the bottom wavelength to a wavelength corresponding to an inflection point of the first derivative information, and calculates an evaluation index using the calculated composite product.

(12) The information processing device according to any one of (1) to (11) above, in which

the arithmetic unit
stores intensity information of a specific wavelength band, and
stores difference information with an adjacent wavelength band of a wavelength band other than the specific wavelength band.

(13) The information processing device according to any one of (1) to (11) above, in which

the arithmetic unit
calculates difference information of envelope information between a specific wavelength band and a wavelength band other than the specific wavelength band,
stores intensity information of the specific wavelength band, and
stores the difference information of a wavelength band other than the specific wavelength band.

(14) The information processing device according to any one of (1) to (13) above, in which the detected band data is data obtained by capturing an image of a farm field.
(15) The information processing device according to any one of (4) and (6) to (11) above, in which the evaluation index is a vegetation evaluation index.
(16) An information processing method, including:

generating multiband data including a plurality of pieces of band data including detected band data of a plurality of wavelength bands and band data of a wavelength band reconstructed from the detected band data; and generating envelope information of spectrum data represented by the multiband data.

(17) A program for causing an information processing device to execute:

a process of generating multiband data including a plurality of pieces of band data including detected band data of a plurality of wavelength bands and band data of a wavelength band reconstructed from the detected band data; and
a process of generating envelope information of spectrum data represented by the multiband data.

REFERENCE SIGNS LIST

| 1 | Information processing device |
| 2 | Signal processing unit |
| 3 | Arithmetic unit |
| Mi | Individual image |
| Mm | Mapping image |
| En1 | Envelope |
| Cr1 | Differential curve |
| $\lambda g$ | Peak wavelength |
| $\lambda r$ | Bottom wavelength |
| $\lambda ir$ | First predetermined wavelength |
| $\lambda b$ | Second predetermined wavelength |
| Pg | First vertex |

Pr      Second vertex
Pir     First reference point
Pb      Second reference point
ΔRE     First triangle
ΔVIS    Second triangle

**Claims**

1. An information processing device, comprising:

    a signal processing unit that generates multiband data including a plurality of pieces of band data including detected band data of a plurality of wavelength bands and band data of a wavelength band reconstructed from the detected band data; and
    an arithmetic unit that generates envelope information of spectrum data represented by the multiband data.

2. The information processing device according to claim 1, wherein
   the arithmetic unit generates first derivative information of the envelope information.

3. The information processing device according to claim 2, wherein

    the arithmetic unit
    detects a zero cross point of the first derivative information,
    specifies, as a peak wavelength of the envelope information, a wavelength of a zero cross point in middle of transition of the first derivative information from positive to negative, and
    specifies, as a bottom wavelength of the envelope information, a wavelength of a zero cross point in middle of transition of the first derivative information from negative to positive.

4. The information processing device according to claim 3, wherein

    the arithmetic unit
    calculates an evaluation index using at least one of the peak wavelength or the bottom wavelength.

5. The information processing device according to claim 3, wherein

    the arithmetic unit
    sets a value corresponding to the peak wavelength obtained from the envelope information as a first vertex,
    sets a value corresponding to the bottom wavelength obtained from the envelope information as a second vertex,
    sets a value corresponding to a predetermined wavelength located on a longer wavelength side than the peak wavelength and the bottom wavelength obtained from the envelope information as a first reference point,
    sets a value corresponding to a predetermined wavelength located on a shorter wavelength side than the peak wavelength and the bottom wavelength obtained from the envelope information as a second reference point, and
    specifies a first triangle including the first vertex, the second vertex, and the first reference point, and a second triangle including the first vertex, the second vertex, and the second reference point.

6. The information processing device according to claim 5, wherein

    the arithmetic unit
    calculates an area of at least one of the first triangle or the second triangle, and
    calculates an evaluation index using calculated area.

7. The information processing device according to claim 5, wherein

    the arithmetic unit
    calculates an angle of at least one interior angle in at least one of the first triangle or the second triangle, and
    calculates an evaluation index using the calculated angle.

8. The information processing device according to claim 5, wherein

the arithmetic unit
calculates a length of at least one side of at least one of the first triangle or the second triangle, and
calculates an evaluation index using the calculated length.

9. The information processing device according to claim 3, wherein

   the arithmetic unit
   calculates a composite product of the first derivative information from the peak wavelength to the bottom wavelength, and
   calculates an evaluation index using the calculated composite product.

10. The information processing device according to claim 3, wherein

    the arithmetic unit
    calculates at least one of a composite product of the first derivative information from the peak wavelength to a first wavelength or a composite product of the first derivative information from the bottom wavelength to a second wavelength, and
    calculates an evaluation index using the calculated composite product.

11. The information processing device according to claim 3, wherein

    the arithmetic unit
    calculates a composite product of the first derivative information from at least one of the peak wavelength or the bottom wavelength to a wavelength corresponding to an inflection point of the first derivative information, and
    calculates an evaluation index using the calculated composite product.

12. The information processing device according to claim 1, wherein

    the arithmetic unit
    stores intensity information of a specific wavelength band, and
    stores difference information with an adjacent wavelength band of a wavelength band other than the specific wavelength band.

13. The information processing device according to claim 1, wherein

    the arithmetic unit
    calculates difference information of envelope information between a specific wavelength band and a wavelength band other than the specific wavelength band,
    stores intensity information of the specific wavelength band, and
    stores the difference information of a wavelength band other than the specific wavelength band.

14. The information processing device according to claim 1, wherein
    the detected band data is data obtained by capturing an image of a farm field.

15. The information processing device according to claim 4, wherein the evaluation index is a vegetation evaluation index.

16. An information processing method, comprising:

    generating multiband data including a plurality of pieces of band data including detected band data of a plurality of wavelength bands and band data of a wavelength band reconstructed from the detected band data; and
    generating envelope information of spectrum data represented by the multiband data.

17. A program for causing an information processing device to execute:

    a process of generating multiband data including a plurality of pieces of band data including detected band data of a plurality of wavelength bands and band data of a wavelength band reconstructed from the detected band data; and
    a process of generating envelope information of spectrum data represented by the multiband data.

# FIG. 1

FIG. 2

EP 4 235 122 A1

# FIG. 3

51

CPU

2

SIGNAL PROCESSING UNIT

3

CALCULATION UNIT

52

ROM

53

RAM

54

55

INPUT-
OUTPUT
I/F

DISPLAY UNIT — 56

INPUT UNIT — 57

AUDIO OUTPUT UNIT — 58

STORAGE UNIT — 59

COMMUNICATION
UNIT — 60

DRIVE — — — STORAGE DEVICE — 62

61

1

# FIG. 4

```
              ( START )
                  |
        [ PERFORM FLIGHT/IMAGING ]  S1
                  |
  [ ACQUIRE IMAGE DATA/PERFORM SIGNAL PROCESSING ]  S2
                  |
      [ PERFORM CALCULATION PROCESSING ]  S3
                  |
   [ PRESENT INFORMATION/RESPOND TO OPERATION ]  S4
                  |
                              No
              < ACTION? >----------------( )
                  |        S5
                 Yes
                  |
      [ GENERATE INSTRUCTION FILE
         INCLUDING ROI FOR ACTION ]  S6
                  |
             [ EXPORT ]  S7
                  |
              ( END )
```

# FIG. 5

## FIG. 6

```
            ┌──────────┐
           (   START    )
            └──────────┘
                 │
    ┌─────────────────────────┐
    │    ACQUIRE IMAGE DATA    │  S51
    └─────────────────────────┘
                 │
    ┌─────────────────────────┐
    │   PERFORM PREPROCESSING  │  S52
    └─────────────────────────┘
                 │
    ┌─────────────────────────────┐
    │ PERFORM MAPPING PROCESSING  │  S53
    └─────────────────────────────┘
                 │
               ( ○ )
```

# FIG. 7

A

B

# FIG. 8

```
        ( FIRST CALCULATION PROCESSING )
                        |
            +-----------------------+
            |        SET ROI        |  S101
            +-----------------------+
                        |
            +-----------------------+
            | GENERATE ENVELOPE INFORMATION |  S102
            +-----------------------+
                        |
            +-----------------------+
            | PERFORM ANALYSIS PROCESSING |  S103
            +-----------------------+
                        |
            +-----------------------+
            | CALCULATE EVALUATION INDEX |  S104
            +-----------------------+
                        |
                       ( )
```

# FIG. 9

R50

R60

# FIG. 10

——— En1    ----- En2

# FIG. 11

——— Cr1    ----- Cr2

# *FIG. 12*

FIRST EXAMPLE OF ANALYSIS PROCESSING (S103)

GENERATE FIRST DERIVATIVE INFORMATION    S201

DETECT ZERO CROSS POINT    S202

SPECIFY PEAK WAVELENGTH
AND BOTTOM WAVELENGTH    S203

## FIG. 13

# FIG. 14

# FIG. 15

## FIG. 16

# FIG. 17

——— Cr1

**A**

λg          λr

450nm                    800nm

40
30
20
10
0
-10
-20

450 470 490 510 530 550 570 590 610 630 650 670 690 710 730 750 770 790 810 830 850

------ Cr2

**B**

λg'          λr'

450nm                    800nm

40
30
20
10
0
-10
-20

450 470 490 510 530 550 570 590 610 630 650 670 690 710 730 750 770 790 810 830 850

# FIG. 18

—— Cr1

# FIG. 19

```
( THIRD EXAMPLE OF ANALYSIS PROCESSING )   (S103)

        │

┌──────────────────────────────────────┐
│ GENERATE FIRST DERIVATIVE INFORMATION │   S201
└──────────────────────────────────────┘

        │

┌──────────────────────────────────────┐
│       DETECT ZERO CROSS POINT         │   S202
└──────────────────────────────────────┘

        │

┌──────────────────────────────────────┐
│       SPECIFY PEAK WAVELENGTH         │   S203
│       AND BOTTOM WAVELENGTH           │
└──────────────────────────────────────┘

        │

┌──────────────────────────────────────┐
│       SET PREDETERMINED RANGE         │   S206
└──────────────────────────────────────┘

        │

┌──────────────────────────────────────┐
│     CALCULATE COMPOSITE PRODUCT       │   S207
└──────────────────────────────────────┘

        │
        ○
```

# FIG. 20

EP 4 235 122 A1

# FIG. 21

# FIG. 22

EP 4 235 122 A1

# FIG. 23

```
┌─────────────────────────────────────┐
│   SECOND CALCULATION PROCESSING      │
└─────────────────────────────────────┘
                    │
┌─────────────────────────────┐
│           SET ROI           │  S101
└─────────────────────────────┘
                    │
┌─────────────────────────────┐
│ GENERATE ENVELOPE INFORMATION │  S102
└─────────────────────────────┘
                    │
┌─────────────────────────────┐
│ SELECT REFERENCE WAVELENGTH BAND │  S105
└─────────────────────────────┘
                    │
┌─────────────────────────────┐
│ GENERATE DIFFERENCE INFORMATION │  S106
└─────────────────────────────┘
                    │
┌─────────────────────────────┐
│  PERFORM SAVING PROCESSING  │  S107
└─────────────────────────────┘
                    │
                   ( )
```

## INTERNATIONAL SEARCH REPORT

| International application No. |
|---|
| **PCT/JP2021/036500** |

| A. | CLASSIFICATION OF SUBJECT MATTER |
|---|---|

*G01J 3/32*(2006.01)i; *A01G 7/00*(2006.01)i; *G01N 21/27*(2006.01)i; *G06Q 50/02*(2012.01)i
FI:   G01J3/32; G01N21/27 B; G06Q50/02; A01G7/00 603

According to International Patent Classification (IPC) or to both national classification and IPC

| B. | FIELDS SEARCHED |
|---|---|

Minimum documentation searched (classification system followed by classification symbols)

G01J3/00-3/52; G01N21/00-21/61; A01G7/00-7/06

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2020-22121 A (SONY CORP) 06 February 2020 (2020-02-06) paragraphs [0019], [0029], [0044]-[0059], fig. 2a, 5, 7 | 1, 14, 16-17 |
| Y | | 2-4, 9-13, 15 |
| Y | JP 2013-50406 A (FUJITSU LTD) 14 March 2013 (2013-03-14) paragraphs [0048], [0057], fig. 11 | 2-4, 9-13, 15 |
| Y | JP 2009-145145 A (DKK TOA CORP) 02 July 2009 (2009-07-02) claim 1, paragraphs [0025]-[0026], fig. 4-5 | 9-11 |
| A | JP 2003-508748 A (EURO-CELTIQUE S.A) 04 March 2003 (2003-03-04) paragraph [0097], fig. 14 | 5 |
| A | JP 2018-98641 A (SONY SEMICONDUCTOR SOLUTIONS CORP) 21 June 2018 (2018-06-21) entire text, all drawings | 1-17 |
| A | US 2019/0222779 A1 (NELSON, Ryan Lee) 18 July 2019 (2019-07-18) entire text, all drawings | 1-17 |

☐ Further documents are listed in the continuation of Box C.          ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 December 2021** | **21 December 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2021/036500**

| Patent document cited in search report | | | Publication date (day/month/year) | Patent family member(s) | Publication date (day/month/year) |
|---|---|---|---|---|---|
| JP | 2020-22121 | A | 06 February 2020 | US 2021/0144345 A1 paragraphs [0044], [0054], [0070]-[0080], fig. 2A, 5, 7 WO 2020/026882 A1 | |
| JP | 2013-50406 | A | 14 March 2013 | (Family: none) | |
| JP | 2009-145145 | A | 02 July 2009 | (Family: none) | |
| JP | 2003-508748 | A | 04 March 2003 | US 6791531 B1 WO 2001/016582 A1 paragraph [0145], fig. 14A, 14B EP 1210583 A1 | |
| JP | 2018-98641 | A | 21 June 2018 | (Family: none) | |
| US | 2019/0222779 | A1 | 18 July 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5162890 B